(19) Europäisches Patentamt
European Patent Office
Office européen des brevets

(11) **EP 3 371 240 B1**

(12) **EUROPÄISCHE PATENTSCHRIFT**

(45) Veröffentlichungstag und Bekanntmachung des Hinweises auf die Patenterteilung:
**18.08.2021   Patentblatt 2021/33**

(21) Anmeldenummer: **16788530.0**

(22) Anmeldetag: **31.10.2016**

(51) Int Cl.:
*C08G 18/62* (2006.01)   *C08G 18/66* (2006.01)
*C08G 18/76* (2006.01)   *C08G 18/08* (2006.01)
*C08G 18/10* (2006.01)   *C08G 18/24* (2006.01)
*C09D 175/06* (2006.01)   *C08G 18/32* (2006.01)
*C08G 18/34* (2006.01)   *C08G 18/40* (2006.01)
*C08G 18/42* (2006.01)   *C08G 18/46* (2006.01)

(86) Internationale Anmeldenummer:
**PCT/EP2016/076187**

(87) Internationale Veröffentlichungsnummer:
**WO 2017/076786 (11.05.2017 Gazette 2017/19)**

(54) **WÄSSRIGE BASISLACKE ENTHALTEND VERNETZTE POLYURETHAN-BINDEMITTEL SOWIE EINE SPEZIELLE LÖSEMITTELZUSAMMENSETZUNG**

WÄSSRIGE BASISLACKE ENTHALTEND VERNETZTE POLYURETHAN-BINDEMITTEL SOWIE EINE SPEZIELLE LÖSEMITTELZUSAMMENSETZUNG

PEINTURE DE BASE AQUEUSE CONTENANT DES LIANTS À BASE DE POLYURÉTHANE RÉTICULÉS ET COMPOSITION DE SOLVANT SPÉCIALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2015   EP 15192706**

(43) Veröffentlichungstag der Anmeldung:
**12.09.2018   Patentblatt 2018/37**

(73) Patentinhaber: **BASF Coatings GmbH**
**48165 Münster (DE)**

(72) Erfinder:
• **STEINMETZ, Bernhard**
  **97080 Wuerzburg (DE)**
• **JANKOWSKI, Peggy**
  **97080 Wuerzburg (DE)**
• **LUHMANN, Nadia**
  **97080 Wuerzburg (DE)**
• **MATURA, Michael**
  **97080 Wuerzburg (DE)**
• **REUTER, Hardy**
  **48165 Muenster (DE)**

(74) Vertreter: **BASF IP Association**
**BASF SE**
**G-FLP-C006**
**67056 Ludwigshafen (DE)**

(56) Entgegenhaltungen:
**EP-A1- 1 736 246      EP-A1- 3 229 976**
**EP-A1- 3 291 922      DE-A1- 19 719 925**
**US-A- 4 745 151       US-A1- 2008 176 061**

**Beschreibung**

Die vorliegende Erfindung betrifft einen pigmentierten wässrigen Basislack enthaltend eine Polyurethan-Polyharnstoff-Dispersion sowie ferner eine spezielle Lösemittelzusammensetzung. Die vorliegende Erfindung betrifft auch die Verwendung eines wässrigen Basislacks enthaltend eine Polyurethan-Polyharnstoff-Dispersion sowie die spezielle Lösemittelzusammensetzung zur Verbesserung der applikationstechnischen Eigenschaften von Basislacken beziehungsweise Beschichtungen, die unter Einsatz des Basislacks hergestellt wurden. Insbesondere im Zusammenhang mit dem Aufbau von Mehrschichtlackierungen besitzt der wässrige Basislack enthaltend diese Dispersion und die spezielle Lösemittelzusammensetzung eine hervorragende Lagerstabilität unter Beibehaltung guter applikationstechnischer Eigenschaften.

**Stand der Technik**

Mehrschichtlackierungen auf unterschiedlichsten Substraten, beispielsweise Mehrschichtlackierungen auf metallischen Substraten im Bereich der Automobilindustrie, sind bekannt. In der Regel umfassen solche Mehrschichtlackierungen, vom metallischen Substrat aus betrachtet, eine Elektrotauchlackschicht, eine direkt auf die Elektrotauchlackschicht aufgebrachte, meist als Füllerschicht bezeichnete Schicht, mindestens eine Farb- und/oder Effektpigmente enthaltende und in der Regel als Basislackschicht bezeichnete Schicht sowie eine Klarlackschicht. Die grundsätzlichen Zusammensetzungen und Funktionen der genannten Schichten und der zum Aufbau dieser Schichten notwendigen Beschichtungsmittel, das heißt Elektrotauchlacke, so genannte Füller, als Basislacke bekannte Farb- und/oder Effektpigmente enthaltende Beschichtungsmittel und Klarlacke, sind bekannt. So dient beispielsweise die Elektrotauchlackschicht grundsätzlich dem Korrosionsschutz des Substrats. Die so genannte Füllerschicht dient hauptsächlich dem Schutz vor mechanischer Beanspruchung wie beispielsweise Steinschlag und zudem dem Ausfüllen von Unebenheiten des Substrats. Die nächste, als Basislackschicht bezeichnete Schicht ist hauptverantwortlich für die Erzeugung von ästhetischen Eigenschaften wie der Farbe und/oder Effekten wie dem Flop, während die dann folgende Klarlackschicht insbesondere der Kratzfestigkeit sowie dem Glanz der Mehrschichtlackierung dient. Solche Mehrschichtlackierungen sowie Verfahren zu deren Herstellung werden beispielsweise in DE 199 48 004 A1, Seite 17, Zeile 37, bis Seite 19, Zeile 22, oder auch in DE 100 43 405 C1, Spalte 3, Absatz [0018], und Spalte 8, Absatz [0052] bis Spalte 9, Absatz [0057], in Verbindung mit Spalte 6, Absatz [0039] bis Spalte 8, Absatz [0050] beschrieben.

Die bekannten Mehrschichtlackierungen wissen bereits viele der von der Automobilindustrie geforderten applikationstechnischen Eigenschaften zu erfüllen. Auch hinsichtlich des ökologischen Profils solcher Lackierungen wurden in der näheren Vergangenheit insbesondere durch den vermehrten Einsatz von wässrigen Lacken, beispielsweise wässrigen Basislacken, Fortschritte erzielt.

Ein jedoch immer wieder auftretendes Problem im Zusammenhang mit der Herstellung von Mehrschichtlackierungen liegt in der Ausbildung von ungewünschten Luft-, Lösemittel- und/oder Feuchtigkeitseinschlüssen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche und Kocher genannt, führen zu einem nachteilhaften optischen Erscheinungsbild. Die anfallenden Mengen an organischen Lösemitteln beziehungsweise Wasser sowie die durch die Applikation eingetragene Luftmenge ist zu groß, als das die gesamte Menge bei der Härtung ohne die Erzeugung von Fehlstellen aus der Mehrschichtlackierung entweichen kann. Im Allgemeinen wird die Robustheit gegenüber der Ausbildung von Läufern, Kochern und Nadelstichen unter dem Begriff der applikationstechnischen Eigenschaften aufsummiert. Zu verstehen ist unter Läuferbildung das Absacken von aufgetragenen jedoch noch nicht vollständig getrockneten beziehungsweise gehärteten Beschichtungsstoffen an vertikalen oder geneigten Flächen. Durch dieses Absacken entsteht in der Regel ein unschönes und ungleichmäßiges Erscheinungsbild in der nach der Härtung resultierenden Beschichtung.

Auch das ökologische Profil von Mehrschichtlackierungen ist noch verbesserungswürdig. Zwar erzielt man durch den Ersatz eines signifikanten Anteils organischer Lösemittel durch Wasser in wässrigen Lacken bereits einen entsprechenden Beitrag. Eine deutliche Verbesserung wäre allerdings durch die Erhöhung des Festkörpergehalts solcher Lacke zu erreichen. Jedoch leidet gerade in wässrigen Basislacken, welche Farb- und/oder Effektpigmente enthalten, die Lagerstabilität unter der Erhöhung des Festkörpergehalts. Die Lagerstabilität beschreibt dabei z.B. das zeitabhängige Absetzverhalten von Pigmenten des Lacks. Die Lagerstabilität von Beschichtungsmitteln beziehungsweise Lacken, beispielsweise wässrigen Basislacken, die z.B. als Bindemittel Polymerdispersionen enthalten, wird unter anderem über die Sedimentationsgeschwindigkeit in Abhängigkeit der Größe der Partikel aus den Dispersionen und die Wirkung des Lösemittels auf die Stabilisierung jener Partikel sowie den Einfluss auf die Viskosität beeinflusst. Die Lagerstabilität kann durch Viskositätsmessungen im flüssigen Zustand über die Zeit beschrieben werden.

Die Höhe des Festkörpergehalts beeinflusst ebenfalls weitere rheologische Eigenschaften, wie eine ausgeprägte Strukturviskosität. Sie wird oft durch den Einsatz von anorganischen Schichtsilikaten erreicht. Auch wenn der Einsatz solcher Silikate zu sehr guten strukturviskosen Eigenschaften führen kann, sind die entsprechenden Lacke hinsichtlich ihres Festkörpergehalts verbesserungswürdig.

Im Stand der Technik werden verschiedenste spezielle Polymere, deren Einsatz in Beschichtungsmitteln sowie deren vorteilhafter Einfluss auf unterschiedliche applikationstechnische Eigenschaften von Lackierungen beziehungsweise Beschichtungen beschrieben.

DE 197 19 924 A1 beschreibt ein Verfahren zur Herstellung einer lagerstabilen Dispersion Aminogruppen-haltiger Polyurethane, bei deren Herstellung Isocyanatgruppen-haltige Polyurethan-Präpolymere mit speziellen Polyaminen, welche keine primären Aminogruppen aufweisen, umgesetzt werden und vor oder nach der Umsetzung in Wasser dispergiert werden. Ein möglicher Anwendungsbereich ist die Bereitstellung von Beschichtungsmitteln.

DE 31 37 748 A1 beschreibt lagerstabile wässrige Dispersionen von PolyurethanPolyharnstoffen, bei deren Herstellung ebenfalls ein Isocyanatgruppen-haltiges Polyurethan-Präpolymer mit einen speziellen Polyamin umgesetzt wird. Ein möglicher Anwendungsbereich ist die Bereitstellung von Überzügen von metallischen Substraten.

WO 2014/007915 A1 offenbart ein Verfahren zur Herstellung einer Automobilmehrschichtlackierung, bei dem ein wässriger Basislack eingesetzt wird, der eine wässrige Dispersion eines Polyurethan-Polyharnstoff-Harzes enthält. Durch den Einsatz des Basislacks werden positive Einflüsse auf die optischen Eigenschaften, insbesondere eine Minimierung von Stippen, erreicht.

WO 2012/160053 A1 beschreibt hydrophile Schichtverbunde für medizinische Geräte, wobei bei der Herstellung des Verbunds auch wässrige Dispersionen von Polyurethan-Polyharnstoff-Harzen eingesetzt werden.

Ebenfalls beschrieben wird der Einsatz von Mikrogelen beziehungsweise Dispersionen solcher Mikrogele in unterschiedlichen Lacken, um auf diese Weise verschiedene applikationstechnische Eigenschaften von Lackierungen zu optimieren. Eine Mikrogel-Dispersion ist bekanntermaßen eine Polymer-Dispersion, in welcher zum einen das Polymer in Form von vergleichsweise kleinen Partikeln mit Teilchengrößen von beispielsweise 0,02 bis 10 Mikrometern vorliegt (»Mikro"-gel). Zum anderen aber sind die Polymer-Partikel zumindest teilweise intramolekular vernetzt, die innere Struktur gleicht also einem typischen polymeren Netzwerk. Aufgrund der molekularen Natur sind diese aber in geeigneten organischen Lösungsmitteln gelöst, makroskopische Netzwerke wären hingegen nur gequollen. Die physikalischen Eigenschaften solcher Systeme mit vernetzten Partikeln in dieser Größenordnung, in der Literatur auch oft mesoskopisch bezeichnet, bewegen sich zwischen den Eigenschaften makroskopischer und mikroskopischer Strukturen molekularer Flüssigkeiten (vergleiche beispielsweise G. Nimtz, P. Marquardt, D. Stauffer, W. Weiss, Science 1988, 242, 1671). Eine genauere Beschreibung von Mikrogelen erfolgt weiter unten.

DE 35 13 248 A1 beschreibt eine Dispersion polymerer Mikropolymerteilchen, wobei als Dispersionsmedium ein flüssiger Kohlenwasserstoff dient. Die Herstellung umfasst die Umsetzung eines Isocyanatgruppen-haltigen Präpolymers mit einem Polyamin wie Diethylentriamin. Als Vorteil wird die Verbesserung des Widerstands gegen das Absacken von Beschichtungen, die die Mikropolymerteilchen enthalten, genannt.

US 4,408,008 beschreibt stabile, kolloidale wässrige Dispersionen von vernetzten Harnstoff-Urethanen, bei deren Herstellung ein in wässriger Lösung dispergiertes Isocyanatgruppen-haltiges Präpolymer enthaltend hydrophile Ethylenoxideinheiten mit polyfunktionellen Amin-Kettenverlängerern umgesetzt wird. Die daraus hergestellten Filme besitzen beispielsweise eine gute Härte und Reißfestigkeit.

EP 1 736 246 A1 beschreibt wässrige Basislacke zur Anwendung im Bereich der Automobillackierung, die ein in Wasser dispergiertes Polyurethan-Harnstoff-Harz enthalten, welches einen vernetzen Anteil von 20 bis 95 % besitzt. Dieses wässrige vernetzte Harz wird in einem zweistufigen Verfahren hergestellt, nämlich durch Herstellung eines Isocyanatgruppen-haltigen Polyurethanpräpolymers und anschließende Umsetzung dieses Präpolymers mit Polyaminen. Das Präpolymer wird in einer Lösung in Aceton mit einem Festkörper von etwa 80 % in Wasser dispergiert und dann mit dem Polyamin umgesetzt. Der Einsatz dieses vernetzten Harzes führt zu vorteilhaften optischen Eigenschaften von Mehrschichtlackierungen.

DE 102 38 349 A1 beschreibt Polyurethan-Mikrogele in Wasser, wobei ein explizit hergestelltes Mikrogel einen vernetzten Gelanteil von 60 % aufweist. Die Mikrogele werden in Wasserbasislacken eingesetzt und führen dort zu vorteilhaften rheologischen Eigenschaften. Zudem werden durch den Einsatz der Wasserbasislacke bei der Herstellung von Mehrschichtlackierungen Vorteile hinsichtlich dekorativer Eigenschaften und Haftungseigenschaften erzielt.

Die vielversprechenden applikationstechnischen Eigenschaften von Mikrogel-Dispersionen, insbesondere wässrigen Mikrogel-Dispersionen, haben dazu geführt, dass diese Klasse von Polymer-Dispersionen als besonders vielversprechend für den Einsatz in wässrigen Beschichtungsmitteln angesehen wird.

Zu beachten ist jedoch, dass solche Mikrogel-Dispersionen beziehungsweise Dispersionen von Polymeren mit wie oben beschriebenem vernetztem Gelanteil so ausgestaltet sein müssen, dass nicht nur die genannten vorteilhaften Eigenschaften resultieren, sondern zudem auch keine negativen Einflüsse auf andere wichtige Eigenschaften von wässrigen Beschichtungsmitteln auftreten. So ist es beispielsweise schwierig, Mikrogel-Dispersionen mit Polymerpartikeln einer bestimmten Partikelgröße bereitzustellen, die zum einen den beschriebenen vernetzten Charakter aufweisen, andererseits aber eine angemessene Lagerstabilität zulassen. Die Lagerstabilität, beziehungsweise ihr Absetzverhalten, wird dabei durch die Größe der Partikel und ihre Stabilisierung in der Dispersion bzw. dem Lack oder dem Beschichtungsmittel bestimmt. Bekanntermaßen besitzen Dispersionen mit vergleichsweise größeren Partikeln im Bereich von beispielsweise größer als 2 Mikrometern (mittlere Teilchengröße) ein erhöhtes Absetzverhalten und damit eine schlechtere Lagerstabilität. Unzureichend im Stand der Technik behandelt ist zudem der Einfluss der im Beschichtungsmittel eingesetzten Lösemittel auf die Stabilisierung dieser Partikel und damit der Einfluss der Lösemittel auf das Absetzverhalten beziehungsweise die Lagerstabilität des Beschichtungsmittels.

**Aufgabe**

Aufgabe der vorliegenden Erfindung war es demnach zunächst, wässrige Beschichtungsmittel, insbesondere Basislacke, enthaltend eine wässrige Polymer-Dispersion, bereitzustellen, über die es gelingt, durch gezielte Auswahl der verwendeten Lösemittel und ihre Zusammensetzung, eine ausgezeichnete Lagerstabilität dieser Basislacke unter Beibehaltung von guten applikationstechnischen Eigenschaften zu bewirken. Letztlich sollten also in Lackierungen, insbesondere Mehrschichtlackierungen, bei deren Herstellung ein solcher lagerstabiler Basislack eingesetzt wurde, die guten applikationstechnischen Eigenschaften, insbesondere ein gutes Nadelstichverhalten, hierbei nochmals insbesondere eine verringerte Nadelstichzahl bzw. Nadelstichgrenze, und eine gute Läuferstabilität, erhalten bleiben.

Die mit der Polymer-Dispersion formulierten Lacke sollten also durch geeignete Auswahl der eingesetzten Lösemittelzusammensetzung lagerstabil sein und dabei ebenfalls auf ökologisch vorteilhafter Weise, insbesondere mit einem hohen Festkörpergehalt, hergestellt werden können, wobei gute applikationstechnische Eigenschaften erhalten bleiben oder sogar verbessert werden sollten.

**Technische Lösung**

Gefunden wurde, dass die genannten Aufgaben gelöst werden konnten durch einen neuen pigmentierten wässrigen Basislack enthaltend eine wässrige Polyurethan-Polyharnstoff-Dispersion (PD) mit in der Dispersion enthaltenen Polyurethan-Polyharnstoff-Partikeln mit einer mittleren Teilchengröße (Volumenmittel) von 40 bis 2000 nm, gemessen wie in der Beschreibung beschrieben, und einem Gelanteil von mindestens 50 Gew.-%, gemessen wie in der Beschreibung beschrieben, wobei die Polyurethan-Polyharnstoff-Partikel, jeweils in umgesetzter Form,
(Z. 1.1) mindestens ein Isocyanatgruppen-haltiges Polyurethan-Präpolymer enthaltend anionische und/oder in anionische Gruppen überführbare Gruppen sowie
(Z.1.2) mindestens ein Polyamin enthaltend zwei primäre Aminogruppen und ein oder zwei sekundäre Aminogruppen enthalten,
dadurch gekennzeichnet,
dass der wässrige Basislack, bezogen auf die Gesamtmenge an im Basislack vorhandenen Lösemitteln (L), in Summe weniger als 9 Gew.-% an Lösemitteln ausgewählt aus der Gruppe bestehend aus Lösemitteln (L1) mit einem HLB-Wert zwischen 5 und 15 und einer Wasserlöslichkeit von > 1,5 Gew.-% bei 20°C, gemessen wie in der Beschreibung beschrieben, enthält, wobei
der HLB-Wert eines Lösemittels (L) dabei wie folgt definiert ist:

$$\text{HLB-Wert (L)} = 20 * (1 - M \text{ (lipophiler Anteil (L))} / M \text{ (L)})$$

wobei den lipophilen Anteil eines Lösemittels (L) die folgenden Kohlenstoff-haltigen Gruppen ausmachen:

Jede Gruppe $CH_n$ mit n = 1 bis 3, sofern sich die Gruppe

(i) nicht in alpha Stellung zu OH, $NH_2$, $CO_2H$ befindet,
(ii) nicht in Ethylenoxid-Einheiten, die sich in einer Ethylenoxid-Kette mit einer endständigen OH-Gruppe vorfinden, befindet und/oder
(iii) nicht in einem cyclischen Molekül oder Molekülteil in alpha-Stellung zu einer verbrückenden funktionellen Gruppe ausgewählt aus -O-, NH- befindet.

Der neue wässrige Basislack wird in der Folge auch als erfindungsgemäßer wässriger Basislack bezeichnet. Bevorzugte Ausführungsformen des erfindungsgemäßen wässrigen Basislacks gehen aus der folgenden Beschreibung sowie den Unteransprüchen hervor.

Ebenfalls Gegenstand der vorliegenden Erfindung ist ein Verfahren zur Herstellung von Mehrschichtlackierungen unter Einsatz des erfindungsgemäßen pigmentierten wässrigen Basislacks sowie die mit Hilfe des besagten Verfahrens herstellbaren Mehrschichtlackierungen. Zudem betrifft die vorliegende Erfindung die Verwendung des erfindungsgemäßen pigmentierten wässrigen Basislacks zur Verbesserung der Lagerstabilität und den applikationstechnischen Eigenschaften von Mehrschichtlackierungen.

Es hat sich gezeigt, dass durch geeignete Auswahl von speziellen Lösemitteln in bestimmten Grenzen in wässrigen, die Dispersion (PD) enthaltenden Basislacken, eine hervorragende Lagerstabilität unter Erhalt guter applikationstechnischer Eigenschaften von Mehrschichtlackierungen, die unter Einsatz der Basislacke hergestellt worden sind, erzielt werden können. Vor allen Dingen zu nennen sind die geringe Änderung der Hochscher-Viskosität des erfindungsgemäßen Basislacks über einen längeren Zeitraum, ein Maß für die Lagerstabilität, unter Erhalt der guten applikationstechnischen Eigenschaften, insbesondere des guten Nadelstichverhaltens sowie einer guten Läuferstabilität. Zudem können die mit der Dispersion formulierten Lacke auf ökologisch vorteilhafte Weise, insbesondere mit einem hohen Festkörpergehalt und/oder der Reduzierung des Gehalts an speziellen Lösemitteln, hergestellt werden, wobei im Bereich der Lagerstabilität oder applikationstechnischen Eigenschaften keine Nachteile resultieren.

**Beschreibung**

Gegenstand der vorliegenden Erfindung ist ein pigmentierter wässriger Basislack (Wasserbasislack) enthaltend mindestens eine, bevorzugt genau eine spezielle Polyurethan-Polyharnstoff Dispersion (PD) und eine spezielle Lösemittelzusammensetzung. Alle weiter unten genannten bevorzugten Ausführungsformen hinsichtlich der Dispersion (PD) gelten selbstverständlich auch in Bezug auf den Basislack enthaltend die Dispersion (PD).

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller vorbehandelten Metall- oder Kunststoffuntergrund, mitunter auch direkt auf dem Kunststoffuntergrund oder direkt auf ein elektrotauchlackiertes metallisches Substrat aufgebracht. Auch Altlackierungen, welche gegebenenfalls noch vorbehandelt werden müssen (beispielsweise durch Anschleifen), können als Untergründe dienen. Um eine Basislackschicht insbesondere gegen Umwelteinflüsse zu schützen, wird auf dieser in der Regel mindestens noch eine zusätzliche Klarlackschicht appliziert. Dies erfolgt in der Regel im nass-in-nass-Verfahren, das heißt der Klarlack wird appliziert, ohne dass die Basislackschicht gehärtet wird. Die Härtung erfolgt dann abschließend gemeinsam mit dem Klarlack.

Der erfindungsgemäße Basislack enthält mindestens eine, bevorzugt genau eine spezielle wässrige Polyurethan-Polyharnstoff-Dispersion (PD).

Die in der Dispersion vorhandenen Polymer-Partikel sind also Polyurethan-Polyharnstoff-basiert. Solche Polymere sind grundsätzlich durch an sich bekannte Polyaddition von beispielsweise Polyisocyanaten mit Polyolen sowie Polyaminen herstellbar. Im Hinblick auf die erfindungsgemäß einzusetzende Dispersion (PD) beziehungsweise die in ihr enthaltenen Polymer-Partikel sind jedoch spezielle, in der Folge erläuterte Bedingungen zu beachten.

Die in der wässrigen Polyurethan-Polyharnstoff-Dispersion (PD) enthaltenen Polyurethan-Polyharnstoff-Partikel besitzen einen Gelanteil von mindestens 50 Gew.-% (Messmethode siehe Beispielteil). Zudem besitzen die in der Dispersion (PD) enthaltenen Polyurethan-Polyharnstoff-Partikel eine mittlere Teilchengröße (Volumenmittel) (auch mittlere Partikelgröße genannt) von 40 bis 2000 Nanometern (nm) (Messmethode siehe Beispielteil).

Bei den erfindungsgemäß einzusetzenden Dispersionen (PD) handelt es sich also um Mikrogel-Dispersionen. Denn eine Mikrogel-Dispersion ist bekanntermaßen eine Polymer-Dispersion, in welcher zum einen das Polymer in Form von vergleichsweise kleinen Partikeln mit Teilchengrößen von beispielsweise 0,02 bis 10 Mikrometern vorliegt ("Mikro"-gel). Zum anderen aber sind die Polymer-Partikel zumindest teilweise intramolekular vernetzt. Letzteres bedeutet, dass die innerhalb eines Partikels vorhandenen Polymerstrukturen einem typischen makroskopischen Netzwerk mit dreidimensionaler Netzwerkstruktur gleichen. Makroskopisch betrachtet handelt es sich bei einer solchen Mikrogel-Dispersion aber nach wie vor um eine Dispersion von Polymerpartikeln in einem Dispersionsmedium, beispielsweise Wasser. Zwar können die Partikel auch untereinander zum Teil Vernetzungsbrücken aufweisen (dies ist rein herstellungsbedingt kaum auszuschließen), jedoch ist das System jedenfalls eine Dispersion mit darin enthaltenen diskreten Partikeln, die eine messbare mittlere Teilchengröße aufweisen. Aufgrund der molekularen Natur sind diese aber in geeigneten organischen Lösungsmitteln gelöst, makroskopische Netzwerke wären hingegen nur gequollen.

Da die Mikrogele Strukturen repräsentieren, welche zwischen verzweigten und makroskopisch vernetzten Systemen liegen, sie folglich die Charakteristika von in geeigneten organischen Lösungsmitteln löslichen Makromolekülen mit Netzwerkstruktur und unlöslichen makroskopischen Netzwerken kombinieren, kann der Anteil der vernetzten Polymeren beispielsweise erst nach Isolation des festen Polymeren nach Entfernung von Wasser und gegebenenfalls organischen Lösungsmitteln und nachfolgender Extraktion ermittelt werden. Dabei macht man sich zunutze, dass die ursprünglich in geeigneten organischen Lösungsmitteln löslichen Mikrogel-Partikel nach Isolation ihre innere Netzwerkstruktur behalten und sich im Feststoff wie ein makroskopisches Netzwerk verhalten. Die Vernetzung kann über den experimentell zugänglichen Gelanteil überprüft werden. Letztlich handelt es sich beim Gelanteil um den Anteil des Polymers aus der Dispersion, der sich als isolierter Feststoff nicht molekular dispers in einem Lösemittel lösen lässt. Dabei muss ausgeschlossen werden, dass bei der Isolierung des polymeren Feststoffs nachgeschaltete Vernetzungsreaktionen den Gelanteil weiter erhöhen. Dieser unlösliche Anteil entspricht wiederum dem Anteil des in der Dispersion in Form von intramolekular vernetzten Partikeln beziehungsweise Partikelanteilen vorliegenden Polymers.

Im Rahmen der vorliegenden Erfindung hat sich gezeigt, dass lediglich die erfindungswesentliche spezielle Lösemittelzusammensetzung in Kombination mit den Mikrogel-Dispersionen alle der geforderten applikationstechnischen Eigenschaften aufweist. Es kommt also insbesondere auf die Kombination der Stabilisierung der in der Dispersion beinhaltenen Polymerpartikel von eher geringen Teilchengrößen mit Hilfe der eingesetzten Lösemittel und einem trotzdem vorhandenen signifikanten vernetzten Anteil beziehungsweise Gelanteil an. Nur auf diese Weise sind die vorteilhaften Eigenschaften, insbesondere die gute Lagerstabilität der wässrigen Basislacke unter Erhalt der guten applikationstechnischen Eigenschaften von Mehrschichtlackierungen zu erreichen.

Die in der wässrigen Polyurethan-Polyharnstoff-Dispersion (PD) enthaltenen Polyurethan-Polyharnstoff-Partikel besitzen vorzugsweise einen Gelanteil von mindestens 50 Gew.-%, besonders bevorzugt von mindestens 65 Gew.-%, insbesondere bevorzugt von mindestens 80 Gew.-%. Der Gelanteil kann also bis zu 100 Gew.-% beziehungsweise annähernd 100 Gew.-%, beispielsweise 99 Gew.-% oder 98 Gew.-% betragen. In einem solchen Fall liegt also das gesamte beziehungsweise annähernd das gesamte Polyurethan-Polyharnstoff-Polymer in Form von vernetzten Partikeln vor.

Die in der Dispersion (PD) enthaltenen Polyurethan-Polyharnstoff-Partikel besitzen vorzugsweise eine mittlere Teilchengröße (Volumenmittel) von 40 bis 2000 nm, nochmals bevorzugt von 100 bis 1500 nm, darunter bevorzugt 110 bis 500 nm und nochmals bevorzugt 120 bis 300 nm. Ein ganz besonders bevorzugter Bereich liegt von 130 bis 250 nm.

Die erhaltene Polyurethan-Polyharnstoff-Dispersion (PD) ist wässrig. Der Ausdruck "wässrig" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält. Bevorzugte Ausführungsformen des wässrigen Charakters, die anhand des Maximalgehalts organischer Lösemittel und/oder anhand des Gehalts an Wasser definiert sind, werden weiter unten beschrieben.

Die in der Dispersion (PD) enthaltenen Polyurethan-Polyharnstoff-Partikel enthalten, jeweils in umgesetzter Form, (Z.1.1) mindestens ein Isocyanatgruppen-haltiges Polyurethan-Präpolymer enthaltend anionische und/oder in anionische Gruppen überführbare Gruppen sowie (Z.1.2) mindestens ein Polyamin enthaltend zwei primäre Aminogruppen und ein oder zwei sekundäre Aminogruppen.

Sofern im Rahmen der vorliegenden Erfindung angegeben ist, dass Polymere, beispielsweise die Polyurethan-Polyharnstoff-Partikel der Dispersion (PD), bestimmte Komponenten in umgesetzter Form enthalten, ist hierunter zu verstehen, dass bei der Herstellung der jeweiligen Polymere diese bestimmten Komponenten als Ausgangsverbindungen eingesetzt werden. Je nach Art der Ausgangsverbindungen erfolgt die jeweilige Umsetzung zum Zielpolymer nach unterschiedlichen Mechanismen. So werden augenscheinlich bei der Herstellung von Polyurethan-Polyharnstoff-Partikeln beziehungsweise Polyurethan-Polyharnstoff-Polymeren die Komponenten (Z.1.1) und (Z.1.2) durch Reaktion der Isocyanatgruppen von (Z.1.1) mit den Aminogruppen von (Z.1.2) unter Ausbildung von Harnstoffbindungen miteinander umgesetzt. Das Polymer enthält dann natürlich die vorher vorhandenen Aminogruppen und Isocyanatgruppen in Form von Harnstoffgruppen, das heißt in ihrer entsprechend umgesetzten Form. Trotzdem enthält das Polymer letztlich die beiden Komponenten (Z.1.1) und (Z.1.2), denn abgesehen von den umgesetzten Isocyanatgruppen und Aminogruppen verbleiben die Komponenten unverändert. Demnach wird der Übersicht halber angegeben, dass das jeweilige Polymer die Komponenten, jeweils in umgesetzter Form, enthält. Die Bedeutung des Ausdrucks "das Polymer enthält, in umgesetzter Form, eine Komponente (X)", ist also gleichzusetzen mit der Bedeutung des Ausdrucks "bei der Herstellung des Polymers wurde die Komponente (X) eingesetzt".

Aus obigem folgt, dass anionische und/oder in anionische Gruppen überführbare Gruppen über das oben genannte Isocyanatgruppen-haltige Polyurethan-Präpolymer in die Polyurethan-Polyharnstoff-Partikel eingebracht werden.

Bevorzugt bestehen die Polyurethan-Polyharnstoff-Partikel aus den beiden Komponenten (Z.1.1) und (Z.1.2), das heißt sie werden aus diesen beiden Komponenten hergestellt.

Die wässrige Dispersion (PD) kann durch ein spezielles dreistufiges Verfahren erhalten werden, was bevorzugt ist. Im Rahmen der Beschreibung dieses Verfahrens werden auch bevorzugte Ausführungsformen der Komponenten (Z.1.1) und (Z.1.2) genannt.

In einem ersten Schritt (I) dieses Verfahrens wird eine spezielle Zusammensetzung (Z) hergestellt.

Die Zusammensetzung (Z) enthält mindestens ein, bevorzugt genau ein spezielles Isocyanatgruppen-haltiges Intermediat (Z.1) mit maskierten primären Aminogruppen.

Die Herstellung des Intermediats (Z.1) umfasst die Umsetzung mindestens eines der Isocyanatgruppen-haltigen Polyurethan-Präpolymers (Z.1.1) enthaltend anionische und/oder in anionische Gruppen überführbare Gruppen mit mindestens ein von einem Polyamin (Z.1.2) abgeleiteten Polyamin (Z.1.2a) enthaltend zwei maskierte primäre Aminogruppen und ein oder zwei freie sekundäre Aminogruppen.

Isocyanatgruppen-haltige Polyurethan-Polymere enthaltend anionische und/oder in anionische Gruppen überführbare Gruppen sind grundsätzlich bekannt. Im Rahmen der vorliegenden Erfindung wird die Komponente (Z.1.1) der besseren Übersichtlichkeit halber als Präpolymer bezeichnet. Es handelt sich nämlich um ein als Vorstufe zu bezeichnendes Polymer, da es als Ausgangskomponente zur Herstellung einer anderen Komponente, nämlich dem Intermediat (Z.1), eingesetzt wird.

Für die Herstellung der Isocyanatgruppen-haltigen Polyurethan-Präpolymere (Z.1.1) enthaltend anionische und/oder in anionische Gruppen überführbare Gruppen können die dem Fachmann bekannten aliphatischen, cycloaliphatischen, aliphatischcycloaliphatischen, aromatischen, aliphatisch-aromatischen und/oder cycloaliphatisch-aromatischen Polyisocyanate eingesetzt werden. Bevorzugt werden Diisocyanate eingesetzt. Beispielhaft seien folgende Diisocyanate genannt: 1,3-oder 1,4-Phenylendiisocyanat, 2,4- oder 2,6-Toluylendiisocyanat, 4,4'- oder 2,4'-Diphenylmethandiisocyanat, 1,4- oder 1,5-Naphthylendiisocyanat, Diisocyanatodiphenylether, Trimethylendiisocyanat, Tetramethylendiisocyanat, Ethylethylendiisocyanat, 2,3-Dimethylethylendiisocyanat, 1-Methyltrimethylendiisocyanat, Pentamethylendiisocyanat, 1,3-Cyclopentylendiisocyanat, Hexamethylendiisocyanat, Cyclohexylendiisocyanat, 1,2-Cyclohexylendiisocyanat, Octamethylendiisocyanat, Trimethylhexandiisocyanat, Tetramethylhexandiisocyanat, Decamethylendiisocyanat, Dodecamethylendiisocyanat, Tetradecamethylendiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, 1-Isocyanatomrthyl-5-isocyanato-1,3,3-trimethylcyclohexan, 2,3-Bis(8-isocyanatooctyl)-4-octyl-5-hexyl-cyclohexen, Tetramethylxylylendiisocyanate (TMXDI) wie m-Tetramethylxylylendiisocyanat oder Mischungen aus diesen Polyisocyanaten. Auch der Einsatz unterschiedlicher Dimere und Trimere der genannten Diisocyanate wie Uretdione und Isocyanurate ist natürlich möglich. Es können auch Polyisocyanate von höherer Isocyanatfunktionalität verwendet werden. Beispiele dafür sind Tris(4-Isocyanatophenyl)methan, 1,3,4-Triisocyanatobenzol, 2,4,6-Triisocyanatotoluol, 1,3,5-Tris(6-Isocyanatohexylbiuret), Bis-(2,5-Diisocyanato-4-methylphenyl)methan. Gegebenenfalls kann die Funktionalität durch Reaktion mit Monoalkoholen bzw. sekundären Aminen herabgesetzt werden. Bevorzugt ist aber der Einsatz von Diisocyanaten, insbesondere bevorzugt der Einsatz von aliphatischen Diisocyanaten, wie Hexamethylendiisocyanat, Isophorondiisocyanat (IPDI), Dicyclohexylmethan-4,4'-diisocyanat, 2,4- oder 2,6-Diisocyanato-1-methylcyclohexan, m-Tetramethylxylylendiisocyanat (m-TMXDI). Als aliphatisch wird ein Isocyanat dann bezeichnet, wenn die Isocyanatgruppen an aliphatische Gruppen angebunden sind, das heißt in alpha-Position zu einer Isocyanatgruppe kein aromatischer Kohlenstoff vorhanden ist.

Zur Herstellung der Präpolymere (Z.1.1) werden die Polyisocyanate in der Regel unter Bildung von Urethanen mit Polyolen, insbesondere Diolen, umgesetzt.

Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol (Messmethode siehe Beispielteil), eingesetzt. Solche Polyesterpolyole, bevorzugt Polyesterdiole, können auf bekannte Weise durch Umsetzung von entsprechenden Polycarbonsäuren, bevorzugt Dicarbonsäuren, und/oder deren Anhydriden mit entsprechenden Polyolen, bevorzugt Diolen, durch Veresterung hergestellt werden. Natürlich können gegebenenfalls zusätzlich auch anteilig Monocarbonsäuren und/oder Monoalkohole zur Herstellung eingesetzt werden. Die Polyesterdiole sind bevorzugt gesättigt, insbesondere gesättigt und linear.

Beispiele für geeignete aromatische Polycarbonsäuren zur Herstellung solcher Polyesterpolyole, bevorzugt Polyesterdiole, sind Phthalsäure, Isophthalsäure und Terephthalsäure, von denen Isophthalsäure vorteilhaft ist und deshalb bevorzugt verwendet wird. Beispiele für geeignete aliphatische Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure und Dodecandicarbonsäure oder auch Hexahydrophthalsäure, 1,3-Cyclohexandicarbonsäure, 1,4-Cyclohexandicarbonsäure, 4-Methylhexahydrophthalsäure, Tricyclodecandicarbonsäure sowie Tetrahydrophthalsäure. Ebenfalls eingesetzt werden können als Dicarbonsäuren Dimerfettsäuren beziehungsweise dimerisierte Fettsäuren, bei denen es sich bekanntermaßen um Gemische handelt, die durch Dimerisierung von ungesättigten Fettsäuren hergestellt werden und beispielsweise unter den Handelsbezeichnungen Radiacid (Firma Oleon) oder Pripol (Firma Croda) zu erhalten sind. Der Einsatz solcher Dimerfettsäuren zur Herstellung von Polyesterdiolen ist im Rahmen der vorliegenden Erfindung bevorzugt. Bevorzugt eingesetzte Polyole zur Herstellung der Präpolymere (Z.1.1) sind also Polyesterdiole, die unter Einsatz von Dimerfettsäuren hergestellt wurden. Insbesondere bevorzugt sind Polyesterdiole, bei deren Herstellung mindestens 50 Gew.-%, bevorzugt 55 bis 75 Gew.-%, der eingesetzten Dicarbonsäuren Dimerfettsäuren sind.

Beispiele für entsprechende Polyole zur Herstellung von Polyesterpolyolen, bevorzugt Polyesterdiolen, sind Ethylenglykol, 1,2- oder 1,3-Propandiol, 1,2-, 1,3-oder 1,4- Butandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol und Trimethylpentandiol. Bevorzugt werden also Diole eingesetzt. Solche Polyole beziehungsweise Diole können natürlich auch direkt zur Herstellung des Präpolymers (Z.1.1) eingesetzt werden, das heißt direkt mit Polyisocyanaten umgesetzt werden.

Weiterhin zur Herstellung der Präpolymere (Z.1.1) eingesetzt werden können auch Polyamine wie Diamine und/oder Aminoalkohole. Beispielhaft seien als Diamine Hydrazin, Alkyl- oder Cycloalkyldiamine wie Propylendiamin und 1-Amino-3-aminomethyl-3,5,5-trimethylcyclohexan und als Aminoalkohole Ethanolamin oder Diethanolamin genannt.

Die Präpolymere (Z.1.1) enthalten anionische und/oder in anionische Gruppen überführbare Gruppen (das heißt Gruppen, die durch den Einsatz bekannter und auch weiter unten genannter Neutralisationsmittel wie Basen in anionische Gruppen überführt werden können). Wie der Fachmann weiß, handelt es sich hierbei um beispielsweise Carbonsäure-, Sulfonsäure- und/oder Phosphonsäuregruppen, insbesondere bevorzugt Carbonsäuregruppen (funktionelle Gruppen, die durch Neutralisationsmittel in anionische Gruppen überführt werden können) sowie aus den vorgenannten funktionellen Gruppen abgeleitete anionische Gruppen wie insbesondere Carboxylat-, Sulfonat- und/oder Phosphonatgruppen, bevorzugt Carboxylatgruppen. Durch die Einführung solcher Gruppen wird bekanntermaßen die Wasserdispergierbarkeit erhöht. Je nach gewählten Bedingungen können die genannten Gruppen anteilig oder nahezu vollständig in der einen Form (beispielsweise Carbonsäure) oder anderen Form (Carboxylat) vorliegen. Ein bestimmender Einflussfaktor liegt beispielsweise im Einsatz der schon angesprochenen und weiter unten noch genauer beschriebenen Neutralisationsmittel. Wird das Präpolymer (Z.1.1) mit solchen Neutralisationsmitteln vermischt, so wird, je nach Menge des Neutralisationsmittels, eine entsprechende Menge der Carbonsäuregruppen in Carboxylatgruppen überführt. Unabhängig davon, in welcher Form die genannten Gruppen vorliegen, wird im Rahmen der vorliegenden Erfindung der besseren Übersichtlichkeit halber aber häufig eine einheitliche Benennung gewählt. Wird beispielsweise für ein Polymer wie für ein Präpolymer (Z.1.1) eine bestimmte Säurezahl angegeben oder wird ein solches Polymer als carboxyfunktionell bezeichnet, sind hiermit immer sowohl die Carbonsäuregruppen als auch die Carboxylatgruppen umfasst. Soll in dieser Hinsicht eine Differenzierung stattfinden, wird dies beispielsweise anhand des Neutralisierungsgrads getan.

Zur Einführung der genannten Gruppen können bei der Herstellung der Präpolymere (Z.1.1) Ausgangsverbindungen eingesetzt werden, die neben, bei der Herstellung von Urethanbindungen umzusetzenden Gruppen, bevorzugt Hydroxylgruppen, noch die oben genannten Gruppen, beispielsweise Carbonsäuregruppen, enthalten. Auf diese Weise werden die entsprechenden Gruppen ins Präpolymer eingeführt.

Als entsprechende Verbindungen zur Einführung der bevorzugten Carbonsäuregruppen kommen, sofern Carboxylgruppen-haltig, Polyetherpolyole und/oder Polyesterpolyole in Betracht. Bevorzugt eingesetzt werden allerdings jedenfalls niedermolekulare Verbindungen, die mindestens eine Carbonsäuregruppe und mindestens eine gegenüber Isocyanatgruppen reaktive funktionelle Gruppe, bevorzugt Hydroxylgruppen, aufweisen. Der Ausdruck "niedermolekulare Verbindung" ist im Rahmen der vorliegenden Erfindung so zu verstehen, dass es sich im Gegensatz zu höhermolekularen Verbindungen, insbesondere Polymeren, um solche handelt, denen als vorzugsweise monomeren Verbindungen ein diskretes Molekulargewicht zugeordnet werden kann. Eine niedermolekulare Verbindung ist also insbesondere kein Polymer, denn letztere stellen sich immer als Mischung von Molekülen dar und müssen über mittlere Molekulargewichte beschrieben werden. Vorzugsweise ist unter dem Begriff niedermolekulare Verbindung zu verstehen, dass die entsprechenden Verbindungen ein Molekulargewicht von weniger als 300 g/mol aufweisen. Bevorzugt ist der Bereich von 100 bis 200 g/mol.

In diesem Sinne bevorzugte Verbindungen sind beispielsweise Monocarbonsäuren enthaltend zwei Hydroxylgruppen wie beispielsweise Dihydroxypropionsäure, Dihydroxybernsteinsäure und Dihydroxybenzoesäure. Ganz besonders sind alpha, alpha Dimethylolalkansäuren wie 2,2-Dimethylolessigsäure, 2,2-Dimethylolpropionsäure, 2,2-Dimethylolbuttersäure und 2,2-Dimethylolpentansäure, insbesondere die 2,2-Dimethylolpropionsäure.

Die Präpolymere (Z.1.1) sind also bevorzugt carboxyfunktionell. Sie besitzen, bezogen auf den Festkörper, bevorzugt eine Säurezahl von 10 bis 35 mg KOH/g, insbesondere 15 bis 23 mg KOH/g (Messmethode siehe Beispielteil).

Das zahlenmittlere Molekulargewicht der Präpolymere kann breit variieren und liegt beispielsweise im Bereich von 2000 bis 20000 g/mol, bevorzugt von 3500 bis 6000 g/mol (Messmethode siehe Beispielteil).

Das Präpolymer (Z.1.1) ist Isocyanatgruppen-haltig. Bevorzugt besitzt es, bezogen auf den Festkörper, einen Isocyanatgehalt von 0,5 bis 6,0 Gew.-%, bevorzugt 1,0 bis 5,0 Gew.-%, insbesondere bevorzugt 1,5 bis 4,0 Gew.-% (Messmethode sie Beispielteil).

Da das Präpolymer (Z.1.1) Isocyanatgruppen-haltig ist, wird die Hydroxylzahl des Präpolymers augenscheinlich in der Regel sehr niedrig sein. Bevorzugt ist die Hydroxylzahl des Präpolymers, bezogen auf den Festkörper, kleiner als 15 mg KOH/g, insbesondere kleiner 10 mg KOH/g, nochmals bevorzugt kleiner 5 mg KOH/g (Messmethode siehe Beispielteil).

Die Herstellung der Präpolymere (Z.1.1) kann nach bekannten und etablierten Methoden in Masse oder Lösung erfolgen, insbesondere bevorzugt durch Umsetzung der Ausgangsverbindungen in organischen Lösemitteln, wie bevorzugt Methylethylketon bei Temperaturen von beispielsweise 60 bis 120°C, und gegebenenfalls unter Einsatz von zur Polyurethanherstellung typischen Katalysatoren. Solche Katalysatoren sind dem Fachmann bekannt, ein Beispiel ist Dibutylzinnlaurat. Dabei ist selbstverständlich so vorzugehen, dass das Verhältnis der Ausgangskomponenten so gewählt wird, dass das Produkt, das heißt das Präpolymer (Z.1.1) Isocyanatgruppen enthält. Ebenfalls unmittelbar ersichtlich ist, dass die Lösemittel so ausgewählt werden sollten, dass diese keine unerwünschten Reaktionen mit den funktionellen Gruppen der Ausgangsverbindungen eingehen, gegenüber diesen Gruppen also insoweit inert sind, dass sie nicht die Umsetzung dieser funktionellen Gruppen behindern. Bevorzugt wird die Herstellung bereits in einem wie weiter unten beschriebenen organischen Lösemittel (Z.2) durchgeführt, da dieses ohnehin in der in Stufe (I) des Verfahrens herzustellenden Zusammensetzung (Z) vorhanden sein muss.

Wie bereits oben angegeben, können die im Präpolymer (Z.1.1) vorhandenen in anionische Gruppen überführbare Gruppen anteilig auch als entsprechend anionische Gruppen vorliegen, beispielsweise durch den Einsatz eines Neutralisationsmittels. Auf diese Weise kann die Wasserdispergierbarkeit der Präpolymere (Z.1.1) und damit auch des Intermediats (Z.1) eingestellt werden.

Als Neutralisationsmittel kommen insbesondere die bekannten basischen Neutralisationsmittel wie beispielsweise Carbonate, Hydrogencarbonate oder Hydroxide von Alkali- und Erdalkalimetallen wie beispielsweise LiOH, NaOH, KOH oder Ca(OH)$_2$ in Betracht. Ebenso zur Neutralisation geeignet sind und im Rahmen der vorliegenden Erfindung bevorzugt eingesetzt werden organische, stickstoffhaltige Basen wie Amine wie Ammoniak, Trimethylamin, Triethylamin, Tributylamine, Dimethylanilin, Triphenylamin, Dimethylethanolamin, Methyldiethanolamin oder Triethanolamin sowie deren Mischungen.

Die Neutralisation des Präpolymers (Z.1.1) mit den Neutralisationsmitteln, insbesondere mit den stickstoffhaltigen, organischen Basen, kann nach der Herstellung des Präpolymers in organischer Phase, das heißt in Lösung mit einem organischen Lösemittel, insbesondere einem wie weiter unten beschriebenen Lösemittel (Z.2) erfolgen. Natürlich kann das Neutralisationsmittel auch bereits während beziehungsweise vor Beginn der eigentlichen Polymerisation zugegeben werden, wobei dann beispielsweise die Carbonsäuregruppen-haltigen Ausgangsverbindungen neutralisiert werden.

Wenn eine Neutralisation der in anionische Gruppen überführbaren Gruppen, insbesondere der Carbonsäuregruppen, gewünscht wird, kann das Neutralisationsmittel beispielsweise in einer solchen Menge zugesetzt werden, dass ein Anteil von 35 bis 65 % der Gruppen neutralisiert ist (Neutralisationsgrad). Bevorzugt ist ein Bereich von 40 bis 60 % (Berechnungsmethode siehe Beispielteil).

Bevorzugt ist, dass das Präpolymer (Z.1.1) nach seiner Herstellung und vor seinem Einsatz zur Herstellung des Intermediats (Z.1) wie beschrieben neutralisiert wird.

Die hier beschriebene Herstellung des Intermediats (Z.1) umfasst die Umsetzung des beschriebenen Präpolymers (Z.1.1) mit mindestens einem, bevorzugt genau einem von einem Polyamin (Z.1.2) abgeleiteten Polyamin (Z.1.2a).

Das Polyamin (Z.1.2a) enthält zwei maskierte primäre Aminogruppen und ein oder zwei freie sekundäre Aminogruppen.

Unter maskierten Aminogruppen sind bekanntermaßen solche zu verstehen, in denen die an sich in freien Aminogruppen vorhandenen Wasserstoffreste am Stickstoff durch reversible Umsetzung mit einem Maskierungsmittel substituiert sind. Aufgrund der Maskierung können die Aminogruppen nicht wie freie Aminogruppen über Kondensationsoder Additionsreaktionen umgesetzt werden, sind also in dieser Hinsicht nicht reaktiv und unterscheiden sich damit von freien Aminogruppen. Erst die Wiederentfernung des reversibel angelagerten Maskierungsmittels, wodurch wiederum die freien Aminogruppen entstehen, ermöglicht dann augenscheinlich die an sich bekannten Reaktionen der Aminogruppen. Das Prinzip ähnelt damit dem Prinzip der auf dem Gebiet der Polymerchemie ebenfalls bekannten blockierten beziehungsweise maskierten Isocyanate.

Die primären Aminogruppen des Polyamins (Z.1.2a) können mit den an sich bekannten Maskierungsmitteln maskiert sein, beispielsweise mit Ketonen und/oder Aldehyden. Bei einer solchen Maskierung entstehen dann also unter Freisetzung von Wasser Ketimine und/oder Aldimine, welche keine Stickstoff-Wasserstoff-Bindungen mehr enthalten, sodass keine typischen Kondensations- oder Additionsreaktionen einer Aminogruppen mit einer weiteren funktionellen Gruppe wie einer Isocyanatgruppe stattfinden können.

Reaktionsbedingungen zur Herstellung eines solchen maskierten primären Amins, beispielsweise eines Ketimins, sind bekannt. So kann beispielsweise unter Zuführung von Wärme zu einer Mischung eines primären Amins mit einem Überschuss eines Ketons, welches gleichzeitig als Lösemittel für das Amin fungiert, eine entsprechende Maskierung realisiert werden. Bevorzugt wird das anfallende Reaktionswasser während der Reaktion entfernt, um die ansonsten mögliche Rückreaktion (Demaskierung) der reversiblen Maskierung zu verhindern.

Auch die Reaktionsbedingungen für eine Demaskierung von maskierten primären Aminogruppen sind an sich bekannt. So ist beispielsweise bereits die Überführung eines maskierten Amins in die wässrige Phase ausreichend, um durch den dann bestehenden Konzentrationsdruck des Wassers das Gleichgewicht wieder auf die Seite der Demaskierung zu verschieben und dadurch unter Verbrauch von Wasser freie primäre Aminogruppen sowie ein freies Keton zu erzeugen.

Aus oben Gesagtem folgt, dass im Rahmen der vorliegenden Erfindung eindeutig zwischen maskierten und freien Aminogruppen unterschieden wird. Wird allerdings eine Aminogruppe weder als maskiert noch als frei spezifiziert, ist hierunter eine freie Aminogruppe zu verstehen.

Bevorzugte Maskierungsmittel zur Maskierung der primären Aminogruppen des Polyamins (Z.1.2a) sind Ketone. Unter den Ketonen sind solche besonders bevorzugt, bei denen es sich um ein wie weiter unten beschriebenes organisches Lösemittel (Z.2) handelt. Denn diese Lösemittel (Z.2) müssen ohnehin in der in Stufe (I) des Verfahrens herzustellenden Zusammensetzung (Z) vorhanden sein. Bereits oben angegeben ist, dass die Herstellung entsprechender mit einem Keton maskierter primärer Amine besonders gut in einem Überschuss des Ketons gelingt. Durch den Einsatz von Ketonen (Z.2) zur Maskierung kann also der entsprechend bevorzugte Herstellungsprozess von maskierten Aminen zur Anwendung kommen, ohne dass das gegebenenfalls ungewünschte Maskierungsmittel aufwendig abgetrennt werden muss. Stattdessen kann die Lösung des maskierten Amins direkt eingesetzt werden, um das Intermediat (Z.1) herzustellen. Bevorzugte Maskierungsmittel sind Aceton, Methylethylketon, Methylisobutylketon, Diisopropylketon, Cyclopentanon oder Cyclohexanon, besonders bevorzugt sind die Ketone (Z.2) Methylethylketon und Methylisobutylketon.

Die bevorzugte Maskierung mit Ketonen und/oder Aldehyden, insbesondere Ketonen und die dabei erfolgende Herstellung von Ketiminen und/oder Aldiminen hat zudem den Vorteil, dass selektiv primäre Aminogruppen maskiert werden. Vorhandene sekundäre Aminogruppen können augenscheinlich nicht maskiert werden und bleiben damit frei. Daher kann ein Polyamin (Z.1.2a), welches neben den zwei maskierten primären Aminogruppen auch ein oder zwei freie sekundäre Aminogruppen enthält, problemlos über die genannten bevorzugten Maskierungsreaktionen aus einem Polyamin (Z.1.2), welches freie sekundäre und primäre Aminogruppen enthält, hergestellt werden.

Die Polyamine (Z.1.2a) können durch Maskierung der primären Aminogruppen von Polyaminen (Z.1.2) enthaltend zwei primäre Aminogruppen und ein oder zwei sekundäre Aminogruppe hergestellt werden. In Frage kommen letztlich alle an sich bekannten aliphatischen, aromatischen oder araliphatischen (gemischt aliphatisch-aromatischen) Polyamine (Z.1.2) mit zwei primären Aminogruppen und einer oder zwei sekundären Aminogruppen. Dies bedeutet, dass neben den genannten Aminogruppen an sich beliebige aliphatische, aromatische oder araliphatische Gruppen vorhanden sein können. Beispielsweise möglich sind einbindige Gruppen, die als endständige Gruppen an einer sekundären Aminogruppe angeordnet sind, oder zweibindige Gruppen, die zwischen zwei Aminogruppen angeordnet sind.

Als aliphatisch werden im Rahmen der vorliegenden Erfindung alle organischen Gruppen bezeichnet, die nicht aromatisch sind. Beispielsweise kann es sich bei den neben den genannten Aminogruppen vorhandenen Gruppen um aliphatische Kohlenwasserstoffgruppen handeln, das heißt Gruppen, die ausschließlich aus Kohlenstoff und Wasserstoff bestehen und nicht aromatisch sind. Diese aliphatischen Kohlenwasserstoffgruppen können linear, verzweigt oder cyclisch sein, wobei sie gesättigt oder ungesättigt sein können. Natürlich können diese Gruppen auch sowohl cyclische und lineare oder verzweigte Anteile enthalten. Möglich ist auch, dass aliphatische Gruppen Heteroatome enthalten, insbesondere in Form von verbrückenden Gruppen wie Ether-, Ester-, Amid- und/oder Urethangruppen. Mögliche aromatische Gruppen sind ebenfalls bekannt und bedürfen keiner weiteren Erläuterung.

Bevorzugt ist, dass die Polyamine (Z.1.2a) zwei maskierte primäre Aminogruppen und ein oder zwei freie sekundäre Aminogruppen besitzen und sie als primäre Aminogruppen ausschließlich maskierte primäre Aminogruppen und als sekundäre Aminogruppen ausschließlich freie sekundäre Aminogruppen besitzen.

Bevorzugt besitzen die Polyamine (Z.1.2a) insgesamt drei oder vier Aminogruppen, wobei diese ausgewählt sind aus der Gruppe der maskierten primären Aminogruppen und der freien sekundären Aminogruppen.

Ganz besonders bevorzugte Polyamine (Z.1.2a) sind solche, die aus zwei maskierten primären Aminogruppen, ein oder zwei freien sekundären Aminogruppen sowie aliphatisch-gesättigten Kohlenwasserstoffgruppen bestehen.

Analoge bevorzugte Ausführungsformen gelten für die Polyamine (Z.1.2), wobei in diesen dann statt maskierten primären Aminogruppen freie primäre Aminogruppen vorhanden sind.

Beispiele von bevorzugten Polyaminen (Z.1.2), aus denen auch durch Maskierung der primären Aminogruppen Polyamine (Z.1.2a) hergestellt werden können, sind Diethylentriamin, 3-(2-Aminoethyl)aminopropylamin, Dipropylentriamin sowie N1-(2-(4-(2-Aminoethyl)piperazin-1-yl)ethyl)ethane-1,2-diamin (eine sekundäre Aminogruppe, zwei zu blockierende primäre Aminogruppen) und Triethylentetramin sowie N,N'-Bis(3-aminopropyl)-ethylendiamin (zwei sekundäre Aminogruppen, zwei zu blockierende primäre Aminogruppen).

Dem Fachmann ist klar, dass schon aus rein synthesetechnischen Gründen nicht immer ein theoretisch-idealisierter quantitativer Umsatz bei der Maskierung von primären Aminogruppen stattfinden kann. Wird beispielweise eine bestimmte Menge eines Polyamins maskiert, kann bei der Maskierung beispielsweise ein Anteil von 95 mol-% oder mehr der primären Aminogruppen maskiert werden (IRspektroskopisch bestimmbar, vergleiche Beispielteil). Besitzt ein Polyamin im nicht maskierten Zustand beispielsweise zwei freie primäre Aminogruppen und werden die primären Aminogruppen einer bestimmten Menge dieses Amins dann maskiert, so wird im Rahmen der vorliegenden Erfindung angegeben, dass dieses Amin zwei maskierte primäre Aminogruppen aufweist, wenn ein Anteil von mehr als 95 mol-% der in der eingesetzten Menge vorhandenen primären Aminogruppen maskiert sind. Dies ist einerseits der schon genannten Tatsache, dass synthesetechnisch nicht immer ein quantitativer Umsatz realisiert werden kann, geschuldet. Andererseits bedeutet die Tatsache, dass mehr als 95 mol-% der primären Aminogruppen maskiert sind, dass der größte Anteil der Gesamtmenge der zur Maskierung eingesetzten Amine tatsächlich ausschließlich maskierte primäre Aminogruppen, nämlich genau zwei maskierte primäre Aminogruppen, enthält.

Die Herstellung des Intermediats (Z.1) umfasst die Umsetzung des Präpolymers (Z.1.1) mit dem Polyamin (Z.1.2a) durch Additionsreaktion von Isocyanatgruppen aus (Z.1.1) mit freien sekundären Aminogruppen aus (Z.1.2a). Diese an sich bekannte Umsetzung führt dann zur Anbindung des Polyamins (Z.1.2a) an das Präpolymer (Z.1.1) unter Ausbildung von Harnstoffbindungen, wodurch letztlich das Intermediat (Z.1) gebildet wird. Es versteht sich von selbst, dass bei der Herstellung des Intermediats (Z.1) bevorzugt also keine anderen Amine mit freien oder maskierten sekundären oder freien oder maskierten primären Aminogruppen eingesetzt werden.

Die Herstellung des Intermediats (Z.1) kann nach bekannten und etablierten Methoden in Masse oder Lösung erfolgen, insbesondere bevorzugt durch Umsetzung von (Z.1.1) mit (Z.1.2a) in organischen Lösemitteln. Unmittelbar ersichtlich ist, dass die Lösemittel so ausgewählt werden sollten, dass diese keine unerwünschten Reaktionen mit den funktionellen Gruppen der Ausgangsverbindungen eingehen, sich gegenüber diesen Gruppen also inert oder weitgehend inert verhalten. Bevorzugt wird als Lösemittel bei der Herstellung zumindest anteilig bereits ein wie weiter unten beschriebenes organisches Lösemittel (Z.2), insbesondere Methylethylketon, eingesetzt, da dieses ohnehin in der in Stufe (I) des Verfahrens herzustellenden Zusammensetzung (Z) vorhanden sein muss. Dabei wird bevorzugt eine Lösung eines Präpolymers (Z.1.1) in einem Lösemittel (Z.2) mit einer Lösung eines Polyamins (Z.1.2a) in einem Lösemittel (Z.2), vermischt, wobei die beschriebene Umsetzung stattfinden kann.

Natürlich kann das so hergestellte Intermediat (Z.1) bei oder nach der Herstellung mit schon oben beschriebenen Neutralisationsmitteln auf die ebenfalls oben für das Präpolymer (Z.1.1) beschriebene Weise neutralisiert werden. Bevorzugt ist aber, dass das Präpolymer (Z.1.1) bereits in wie oben beschriebener Art vor seinem Einsatz zur Herstellung des Intermediats (Z.1) neutralisiert wird, sodass eine Neutralisierung bei oder nach der Herstellung von (Z.1) nicht mehr relevant ist. In einem solchen Fall ist also der Neutralisationsgrad des Präpolymers (Z.1.1) mit dem Neutralisationsgrad des Intermediats (Z.1) gleichzusetzen. Erfolgt im Rahmen des Verfahrens überhaupt keine weitere Zugabe von Neutralisationsmitteln, so ist demnach auch der Neutralisationsgrad der in den schließlich hergestellten erfindungsgemäßen Dispersionen (PD) enthaltenen Polymeren mit dem Neutralisationsgrad des Präpolymers (Z.1.1) gleichzusetzen.

Das Intermediat (Z.1) besitzt maskierte primäre Aminogruppen. Dies ist augenscheinlich dadurch zu erreichen, dass bei der Umsetzung des Präpolymers (Z. 1.1) und des Polyamins (Z.1.2a) die freien sekundären Aminogruppen zur Reaktion gebracht werden, jedoch die maskierten primären Aminogruppen nicht umgesetzt werden. Denn wie schon oben beschrieben wird durch die Maskierung erreicht, dass keine typischen Kondensations- oder Additionsreaktionen mit weiteren funktionellen Gruppen wie Isocyanatgruppen stattfinden können. Selbstverständlich bedeutet dies, dass die Bedingungen bei der Umsetzung so zu wählen sind, dass die maskierten Aminogruppen auch maskiert bleiben, um hierdurch ein Intermediat (Z.1) bereitzustellen. Entsprechende Bedingungen weiß der Fachmann einzustellen und wird beispielsweise durch die ohnehin bevorzugte Reaktion in organischen Lösemitteln realisiert.

Das Intermediat (Z.1) ist Isocyanatgruppen-haltig. Demnach muss bei der Umsetzung von (Z.1.1) und (Z.1.2a) das Verhältnis dieser Komponenten selbstverständlich so gewählt werden, dass das Produkt, das heißt das Intermediat (Z.1), Isocyanatgruppen enthält.

Da wie oben beschrieben bei der Umsetzung von (Z.1.1) mit (Z.1.2a) freie sekundäre Aminogruppen mit Isocyanatgruppen umgesetzt werden, die primären Aminogruppen aber aufgrund der Maskierung nicht umgesetzt werden, ist damit zunächst unmittelbar klar, dass bei dieser Umsetzung das molare Verhältnis von Isocyanatgruppen von (Z.1.1) zu freien sekundären Aminogruppen von (Z.1.2a) größer 1 sein muss. Dieses Merkmal ergibt sich implizit, nichtsdestotrotz eindeutig und unmittelbar aus dem erfindungswesentlichen Merkmal, dass das Intermediat (Z.1) Isocyanatgruppen-haltig ist.

Bevorzugt ist allerdings, dass bei der Umsetzung ein wie folgt definierter Überschuss an Isocyanatgruppen vorliegt. Die molaren Mengen (n) von Isocyanatgruppen, freien sekundären Aminogruppen und maskierten primären Aminogruppen genügen in dieser bevorzugten Ausführungsform der folgenden Bedingung: [n (Isocyanatgruppen von (Z.1.1)) - n (freie sekundäre Aminogruppen von (Z.1.2a)) ] / n (maskierte primäre Aminogruppen von (Z.1.2a)) = 1,2/1 bis 4/1, bevorzugt 1,5/1 bis 3/1, ganz besonders bevorzugt 1,8/1 bis 2,2/1, nochmals bevorzugt 2/1.

In diesen bevorzugten Ausführungsformen besitzt das Intermediat (Z.1), welches durch Umsetzung von Isocyanatgruppen von (Z.1.1) mit den freien sekundären Aminogruppen von (Z.1.2a) entsteht, im Verhältnis zu den maskierten primären Aminogruppen einen Überschuss von Isocyanatgruppen. Dies wird letztlich dadurch erreicht, dass das molare Verhältnis von Isocyanatgruppen von (Z.1.1) zu der Gesamtmenge von freien sekundären Aminogruppen und maskierten primären Aminogruppen von (Z.1.2a) so groß gewählt wird, dass auch nach der Herstellung von (Z.1) und dem entsprechenden Verbrauch von Isocyanatgruppen durch die Umsetzung mit den freien sekundären Aminogruppen ein entsprechender Überschuss der Isocyanatgruppen verbleibt.

Hat beispielsweise das Polyamin (Z.1.2a) eine freie sekundäre Aminogruppe und zwei maskierte primäre Aminogruppen, so wird das molare Verhältnis zwischen den Isocyanatgruppen von (Z.1.1) zu dem Polyamin (Z.1.2a) in der ganz besonders bevorzugten Ausführungsform mit 5/1 eingestellt. Der Verbrauch von einer Isocyanatgruppe bei der Umsetzung mit der freien sekundären Aminogruppe würde dann bedeuten, dass für die oben genannte Bedingung 4/2 (beziehungsweise 2/1) realisiert ist.

Der Anteil des Intermediats (Z.1) beträgt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%, jeweils bezogen auf die Gesamtmenge der Zusammensetzung (Z).

Die Bestimmung des Anteils eines Intermediats (Z.1) kann wie folgt durchgeführt werden: Es wird der Festkörper einer Mischung, die neben dem Intermediat (Z.1) lediglich organische Lösemittel enthält, bestimmt (Messmethode zur Bestimmung des Festkörpers (auch Festkörpergehalt oder Feststoffgehalt genannt) siehe Beispielteil). Der Festkörper entspricht dann der Menge des Intermediats (Z.1). Durch Berücksichtigung des Festkörpers der Mischung kann damit der Anteil des Intermediats (Z.1) an der Zusammensetzung (Z) ermittelt beziehungsweise festgelegt werden. Da das Intermediat (Z.1) bevorzugt ohnehin in einem organischen Lösemittel hergestellt wird, nach der Herstellung also ohnehin in einer Mischung vorliegt, die neben dem Intermediat lediglich organische Lösemittel enthält, ist dies die Methode der Wahl.

Die Zusammensetzung (Z) enthält zudem mindestens ein spezielles organisches Lösemittel (Z.2).

Die Lösemittel (Z.2) besitzen bei einer Temperatur von 20°C eine Löslichkeit in Wasser von höchstens 38 Gew.-% (Messmethode siehe Beispielteil). Bevorzugt ist die Löslichkeit in Wasser bei einer Temperatur von 20°C kleiner 30 Gew.-%. Ein bevorzugter Bereich ist von 1 bis 30 Gew.-%.

Demzufolge besitzt das Lösemittel (Z.2) eine eher moderate Löslichkeit in Wasser, ist insbesondere nicht vollständig mischbar mit Wasser beziehungsweise besitzt keine unbegrenzte Löslichkeit in Wasser. Vollständig mischbar mit Wasser ist ein Lösemittel dann, wenn es in beliebigen Verhältnissen mit Wasser vermischt werden kann, ohne dass es zu einer Entmischung, das heißt Zweiphasenbildung kommt.

Beispiele von Lösemitteln (Z.2) sind Methylethylketon, Methylisobutylketon, Diisobutylketon, Diethylether, Dibutylether, Dipropylenglykoldimethylether, Ethylenglykoldiethylether, Toluol, Methylacetat, Ethylacetat, Butylacetat, Propylencarbonat, Cyclohexanon oder Gemische dieser Lösemittel. Bevorzugt ist Methylethylketon, welches bei 20°C eine Löslichkeit in Wasser von 24 Gew.-% aufweist.

Keine spezielle organische Lösemittel (Z.2) sind damit Lösemittel wie Aceton, N-Methyl-2-pyrrolidon, N-Ethyl-2-pyrrolidon, Tetrahydrofuran, Dioxan, N-Formylmorpholin, Dimethylformamid oder Dimethylsulfoxid.

Durch die Auswahl der speziellen Lösemittel (Z.2) mit nur begrenzter Wasserlöslichkeit wird insbesondere erreicht, dass bei der in Schritt (II) des Verfahrens erfolgenden Dispergierung der Zusammensetzung (Z) in wässriger Phase nicht direkt eine homogene Lösung gebildet werden kann. Es wird angenommen, dass die stattdessen vorliegende Dispersion ermöglicht, dass die unter Schritt (II) stattfindenden Vernetzungsreaktionen (Additionsreaktionen von freien primären Aminogruppen und Isocyanatgruppen unter Bildung von Harnstoffbindungen) in eingeschränkten Volumen ablaufen, wodurch letztlich die Bildung der wie oben definierten Mikropartikel ermöglicht wird.

Bevorzugte Lösemittel (Z.2) besitzen neben der beschriebenen Wasserlöslichkeit einen Siedepunkt von höchstens 120°C, besonders bevorzugt von höchstens 90°C (bei Normaldruck, das heißt 1,013 bar). Dies hat Vorteile bei dem weiter unten beschriebenen Schritt (III) des Verfahrens, das heißt der zumindest teilweisen Entfernung des mindestens einen organischen Lösemittels (Z.2) aus der Dispersion, die in Schritt (II) des Verfahrens hergestellt wird. Denn augenscheinlich können bei Einsatz der in diesem Sinne bevorzugten Lösemittel (Z.2) diese Lösemittel beispielsweise destillativ entfernt werden, ohne das gleichzeitig signifikante Mengen des in Schritt (II) des Verfahrens eingebrachten Wassers entfernt werden. Somit entfällt beispielsweise das aufwendige Nachgeben von Wasser zum Erhalt des wässrigen Charakters der Dispersion (PD).

Der Anteil des mindestens einen organischen Lösemittels (Z.2) beträgt von 35 bis 85 Gew.-%, bevorzugt von 40 bis 75 Gew.-%, nochmals bevorzugt von 45 bis 70 Gew.-%, insbesondere bevorzugt von 47,5 bis 65 Gew.-% und in einer ganz besonderen Ausführungsform von 50 bis 60 Gew.-%, jeweils bezogen auf die Gesamtmenge der Zusammensetzung (Z).

Im Rahmen der vorliegenden Erfindung hat sich gezeigt, dass durch die gezielte Kombination eines wie oben spezifizierten Anteils des Intermediats (Z.1) an der Zusammensetzung (Z) und der Auswahl der speziellen Lösemittel (Z.2) nach den in der Folge beschriebenen Schritten (II) und (III) Polyurethan-Polyharnstoff-Dispersionen bereitgestellt werden können, die Polyurethan-Polyharnstoff-Partikel mit der erforderlichen Teilchengröße enthalten, die zudem den erforderlichen Gelanteil aufweisen.

Die beschriebenen Komponenten (Z.1) und (Z.2) machen in Summe bevorzugt mindestens 90 Gew.-% der Zusammensetzung (Z) aus. Bevorzugt machen die beiden Komponenten mindestens 95 Gew.-%, insbesondere mindestens 97,5 Gew.-% der Zusammensetzung (Z) aus. Ganz besonders bevorzugt besteht die Zusammensetzung (Z) aus diesen beiden Komponenten. In diesem Zusammenhang sei darauf hingewiesen, dass im Falle des Einsatzes von wie oben beschriebenen Neutralisationsmitteln diese Neutralisationsmittel bei der Berechnung der Menge eines Intermediats (Z.1) dem Intermediat zugerechnet werden. Denn in diesem Fall besitzt das Intermediat (Z.1) jedenfalls anionische Gruppen, die auf den Einsatz des Neutralisationsmittels zurückgehen. Das nach der Bildung dieser anionischen Gruppen vorhandene Kation wird demzufolge ebenfalls dem Intermediat zugerechnet.

Sofern die Zusammensetzung (Z) neben den Komponenten (Z.1) und (Z.2) noch andere Komponenten enthält, handelt es sich hierbei bevorzugt lediglich um organische Lösemittel. Bevorzugt entspricht der Festkörper der Zusammensetzung (Z) damit dem Anteil des Intermediats (Z.1) an der Zusammensetzung (Z). Die Zusammensetzung (Z) besitzt somit bevorzugt einen Festkörpergehalt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%.

Eine besonders bevorzugte Zusammensetzung (Z) enthält also in Summe mindestens 90 Gew.-% der Komponenten (Z.1) und (Z.2) und enthält neben dem Intermediat (Z.1) ausschließlich organische Lösemittel.

Ein Vorteil der Zusammensetzung (Z) liegt darin, dass sie ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Zusammensetzung (Z) bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Zusammensetzung (Z) vollständig frei von diesen organischen Lösemitteln.

In einem zweiten Schritt (II) des hier beschriebenen Verfahrens wird die Zusammensetzung (Z) in wässriger Phase dispergiert.

Bekannt ist und auch aus bereits oben Gesagtem folgt, dass damit im Schritt (II) eine Demaskierung der maskierten primären Aminogruppen des Intermediats (Z.1) realisiert wird. Denn durch die Überführung eines maskierten Amins in die wässrige Phase wird unter Verbrauch von Wasser das reversibel angelagerte Maskierungsmittel freigesetzt und es werden freie primäre Aminogruppen gebildet.

Ebenfalls klar ist damit, dass die so entstandenen freien primären Aminogruppen dann mit ebenfalls vorhandenen Isocyanatgruppen des Intermediats (Z.1) beziehungsweise des aus dem Intermediat (Z.1) entstanden demaskierten Intermediats durch Additionsreaktion unter Bildung von Harnstoffbindungen umgesetzt werden.

Bekannt ist auch, dass die Überführung in die wässrige Phase bedeutet, dass grundsätzlich die Möglichkeit besteht, dass Isocyanatgruppen des Intermediats (Z.1) beziehungsweise des aus dem Intermediat (Z.1) entstanden demaskierten Intermediats mit dem Wasser unter Abspaltung von Kohlenstoffdioxid zu freien primären Aminogruppen reagieren, welche dann wiederum mit noch vorhandenen Isocyanatgruppen umgesetzt werden können.

Die oben genannten Reaktionen und Umsetzungen verlaufen selbstverständlich parallel zueinander. Letztlich entsteht dabei durch beispielsweise intermolekulare und intramolekulare Umsetzung beziehungsweise Vernetzung eine Dispersion enthaltend Polyurethan-Polyharnstoff-Partikel mit definierter mittlerer Teilchengröße und definiertem Vernetzungsgrad beziehungsweise Gelanteil.

In Schritt (II) des hier beschriebenen Verfahrens wird die Zusammensetzung (Z) in Wasser dispergiert, wobei eine Demaskierung der maskierten primären Aminogruppen des Intermediats (Z.1) und eine Umsetzung der so entstandenen freien primären Aminogruppen mit den Isocyanatgruppen des Intermediats (Z.1) sowie den Isocyanatgruppen des aus dem Intermediat (Z.1) entstandenen demaskierten Intermediats durch Additionsreaktion erfolgt.

Schritt (II) des hier beschriebenen Verfahrens, das heißt die Dispergierung in wässriger Phase, kann auf an sich beliebige Weise erfolgen. Das heißt, es kommt letztlich nur darauf an, dass die Zusammensetzung (Z) mit Wasser beziehungsweise einer wässrigen Phase gemischt wird. Bevorzugt kann die Zusammensetzung (Z), welche nach der Herstellung beispielsweise bei Raumtemperatur (das heißt 20°C) oder bei gegenüber Raumtemperatur erhöhter Temperatur von beispielsweise 30 bis 60°C vorliegen kann, in Wasser eingerührt werden, wodurch eine Dispersion entsteht. Das vorgelegte Wasser hat dabei beispielsweise Raumtemperatur. Es kann in reinem Wasser (deionisiertem Wasser) dispergiert werden, das heißt die wässrige Phase besteht lediglich aus Wasser, was bevorzugt ist. Natürlich kann die wässrige Phase neben Wasser auch anteilig typische Hilfsstoffe wie typische Emulgatoren und Schutzkolloide enthalten. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S. 411 ff.

Von Vorteil ist es, wenn in Stufe (II) des Verfahrens, das heißt bei der Dispergierung der Zusammensetzung (Z) in wässriger Phase, das Gewichtsverhältnis von organischen Lösemitteln und Wasser so gewählt wird, dass die resultierende Dispersion ein Gewichtsverhältnis von Wasser zu organischen Lösemitteln von größer 1, bevorzugt von 1,05 bis 2/1, insbesondere bevorzugt von 1,1 bis 1,5/1 aufweist.

In Schritt (III) des hier beschriebenen Verfahrens erfolgt die zumindest teilweise Entfernung des mindestens einen organischen Lösemittels (Z.2) aus der in Schritt (II) erhaltenen Dispersion. Natürlich können in Schritt (III) des Verfahrens auch weitere Lösemittel, die beispielsweise gegebenenfalls in der Zusammensetzung (Z) vorhanden waren, entfernt werden.

Die Entfernung des mindestens einen organischen Lösemittels (Z.2) und gegebenenfalls weiterer organischer Lösemittel kann auf beliebige bekannte Weise, beispielsweise durch Vakuumdestillation bei gegenüber Raumtemperatur leicht erhöhten Temperaturen von beispielsweise 30 bis 60°C erfolgen.

Die erhaltene Polyurethan-Polyharnstoff-Dispersion (PD) ist wässrig (zur grundsätzlichen Definition von "wässrig" siehe weiter oben).

Ein besonderer Vorteil der erfindungsgemäß einzusetzenden Dispersion (PD) ist, dass sie mit nur sehr geringen Anteilen an organischen Lösemitteln formuliert werden kann, trotzdem aber die eingangs beschriebenen erfindungsgemäßen Vorteile ermöglicht. Die erfindungsgemäß einzusetzende Dispersion (PD) enthält bevorzugt höchstens 15,0 Gew.-%, insbesondere bevorzugt höchstens 10 Gew.-%, ganz besonders bevorzugt höchstens 5 Gew.-% und nochmals bevorzugt höchstens 2,5 Gew.-% organische Lösemittel (Messmethode siehe Beispielteil).

Der Anteil des Polyurethan-Polyharnstoff-Polymers in der Dispersion (PD) beträgt bevorzugt 25 bis 55 Gew.-%, bevorzugt 30 bis 50 Gew.-%, nochmals bevorzugt 35 bis 45 Gew.-%, jeweils bezogen auf die Gesamtmenge der Dispersion (Bestimmung analog der oben für das Intermediat (Z.1) beschriebenen Bestimmung über den Festkörpergehalt).

Der Anteil von Wasser in der Dispersion (PD) beträgt bevorzugt 45 bis 75 Gew.-%, bevorzugt 50 bis 70 Gew.-%, nochmals bevorzugt 55 bis 65 Gew.-%, jeweils bezogen auf die Gesamtmenge der Dispersion.

Es ist ein besonderer Vorteil der erfindungsgemäß einzusetzenden Dispersion (PD), dass sie so formuliert werden kann, dass sie zu mindestens 90 Gew.-%, bevorzugt mindestens 92,5 Gew.-%, ganz besonders bevorzugt zu mindestens 95 Gew.-% und nochmals bevorzugt zu mindestens 97,5 Gew.-% aus den Polyurethan-Polyharnstoff-Partikeln und Wasser besteht (der zugehörige Wert ergibt sich durch Aufsummierung der Menge der Partikel (das heißt des Polymers, bestimmt über den Festkörpergehalt) und der Menge Wasser). Es hat sich gezeigt, dass die Dispersionen trotz dieses geringen Anteils von weiteren Komponenten wie insbesondere organischen Lösemitteln in jedem Fall sehr stabil, insbesondere lagerstabil, sind. Auf diese Weise werden zwei relevante Vorteile vereint. Zum einen werden Dispersionen bereitgestellt, die in wässrigen Basislacken eingesetzt werden können und dort zu den eingangs und auch in den nachstehenden Beispielen beschriebenen applikationstechnischen Vorteilen führen. Zum zweiten aber wird eine angemessene Formulierungsfreiheit bei der Herstellung von wässrigen Basislacken erreicht. Dies bedeutet, dass in den Basislacken zusätzliche Anteile organischer Lösemittel eingesetzt werden können, die beispielsweise notwendig sind, um verschiedene Komponenten angemessen zu formulieren. Dabei wird dann aber nicht der grundsätzlich wässrige Charakter des Basislacks gefährdet. Im Gegenteil können die Basislacke trotzdem mit vergleichsweise niedrigen Anteilen organischer Lösemittel formuliert werden, weisen also ein besonders gutes ökologisches Profil auf.

Nochmals bevorzugter ist, dass die Dispersion neben dem Polymer lediglich Wasser und gegebenenfalls organische Lösemittel, beispielsweise in Form von Restanteilen, die in Stufe (III) des Verfahrens nicht vollständig abgetrennt worden sind, enthält. Demzufolge beträgt der Festkörper der Dispersion (PD) bevorzugt 25 bis 55 %, bevorzugt 30 bis 50 %, nochmals bevorzugt 35 bis 45 % und stimmt darunter nochmals bevorzugt mit dem Anteil des Polymers an der Dispersion überein.

Ein Vorteil der Dispersion (PD) liegt darin, dass sie ohne den Einsatz von umwelt- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Dispersion (PD) bevorzugt weniger als 7,5 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Dispersion (PD) vollständig frei von diesen organischen Lösemitteln.

Das in der Dispersion vorhandene Polyurethan-Polyharnstoff-Polymer besitzt, bezogen auf den Festkörper, bevorzugt eine Säurezahl von 10 bis 35 mg KOH/g, insbesondere von 15 bis 23 mg KOH/g (Messmethode siehe Beispielteil).

Das in der Dispersion vorhandene Polyurethan-Polyharnstoff-Polymer besitzt bevorzugt kaum oder keine Hydroxylgruppen. Die OH-Zahl des Polymers liegt, bezogen auf den Festkörper, bevorzugt kleiner als 15 mg KOH/g, insbesondere kleiner 10 mg KOH/g, nochmals bevorzugt kleiner 5 mg KOH/g (Messmethode siehe Beispielteil).

Der Anteil der erfindungsgemäß einzusetzenden Dispersionen (PD), bezogen auf das Gesamtgewicht des pigmentierten wässrigen Basislacks, beträgt bevorzugt 2,5 bis 60 Gew.-%, besonders bevorzugt 10 bis 50 Gew.-% und ganz besonders bevorzugt 15 bis 40 Gew.-% oder sogar 15 bis 30 Gew.-%.

Der Anteil der aus den Dispersionen (PD) stammenden Polyurethan-Polyharnstoff-Polymere beträgt, bezogen auf das Gesamtgewicht des wässrigen Basislacks, vorzugsweise von 0,6 bis 33,0 Gew.-%, bevorzugt 3,0 bis 25,0 Gew.-%, besonders bevorzugt 5,0 bis 18,0 Gew.-%.

Die Bestimmung beziehungsweise Festlegung des Anteils der aus den Dispersionen (PD) stammenden Polyurethan-Polyharnstoff-Polymere am Basislack kann über die Bestimmung des Festkörpers einer erfindungsgemäß einzusetzenden Dispersion (PD) erfolgen, die in dem Basislack eingesetzt werden soll.

Im Falle einer möglichen Spezifizierung auf Basislacke enthaltend bevorzugte Dispersionen (PD) in einem speziellen Anteilsbereich gilt folgendes. Die Dispersionen (PD), die nicht in die bevorzugte Gruppe fallen, können selbstverständlich weiterhin im Basislack enthalten sein. Der spezielle Anteilsbereich gilt dann nur für die bevorzugte Gruppe von Dispersionen (PD). Bevorzugt ist allerdings, dass für den Gesamtanteil von Dispersionen (PD) bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 3 bis 25 Gew.-% und eine bevorzugte Gruppe von Dispersionen (PD) durchgeführt werden, so gilt dieser Anteilsbereich augenscheinlich zunächst nur für die bevorzugte Gruppe an Dispersionen (PD). Bevorzugt wäre dann aber, dass insgesamt von allen ursprünglich umfassten Dispersionen bestehend aus Dispersionen aus der bevorzugten Gruppe und Dispersionen, die nicht in die bevorzugte Gruppe fallen, ebenfalls von 3 bis 25 Gew.-% enthalten sind. Werden also 15 Gew.-% von Dispersionen (PD) der bevorzugten Gruppe eingesetzt, so können höchstens 10 Gew.-% der Dispersionen der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die weiter unten genannten Pigmente oder auch die weiter unten genannten Vernetzungsmittel wie Melaminharze.

Der erfindungsgemäß einzusetzende Basislack enthält bevorzugt mindestens ein Pigment. Hierunter zu verstehen sind an sich bekannte farbgebende und/oder optisch effektgebende Pigmente.

Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Der Anteil der Pigmente liegt vorzugsweise im Bereich von 1,0 bis 30,0 Gew.-%, bevorzugt 1,5 bis 20,0 Gew.-%, besonders bevorzugt 2,0 bis 15,0 Gew.-%, jeweils bezogen auf das Gesamtgewicht des wässrigen Basislacks.

Der erfindungsgemäße Basislack enthält durch den Einsatz der Dispersion (PD) und des darin enthaltenen Polymers härtbare Bindemittel. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das in der Dispersion (PD) enthaltene Polymer oder weitere wie unten beschriebene einsetzbare Polymere und wie unten beschriebene typische Vernetzungsmittel. Im Folgenden wird der Ausdruck allerdings, schon der besseren Übersichtlichkeit halber, hauptsächlich in Bezug auf bestimmte physikalisch und gegebenenfalls auch thermisch härtbare Polymere, beispielsweise die Polymere in den Dispersionen (PD) oder auch davon verschiedene Polyurethane, Polyester, Polyacrylate und/oder Mischpolymerisate der genannten Polymere, verwendet.

Im Rahmen der vorliegenden Erfindung bedeutet der Begriff "physikalische Härtung" die Bildung eines Films durch Abgabe von Lösemitteln aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder selbstvernetzende Bindemittel oder aber ein separat vorliegendes Vernetzungsmittel in Kombination mit einem Polymer als Bindemittel eingesetzt wird (Fremdvernetzung). Das Vernetzungsmittel enthält reaktive funktionelle Gruppen, die zu den in den Bindemitteln vorhandenen reaktiven funktionellen Gruppen komplementär sind. Durch die Reaktion der Gruppen erfolgt dann eine Vernetzung und damit schließlich die Bildung eines makroskopisch vernetzten Lackfilms.

Klar ist, dass die in einem Lack enthaltenen Bindemittelkomponenten immer zumindest anteilig physikalisch härten werden. Wird also angegeben, dass ein Lack Bindemittelkomponenten enthält, die thermisch härtbar sind, wird hierdurch selbstverständlich nicht ausgeschlossen, dass bei der Härtung auch eine anteilige physikalische Härtung auftritt.

Der erfindungsgemäße Basislack enthält bevorzugt noch mindestens ein von dem in der Dispersion (PD) enthaltenen Polyurethan-Polyharnstoff-Polymer verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 oder in der US 2014/0065428 A1 Seite 2 [0025] bis [0035] beschrieben. Bevorzugte Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell und besitzen insbesondere bevorzugt eine OH-Zahl im Bereich von 20 bis 200 mg KOH/g, besonders bevorzugt von 50 bis 150 mg KOH/g. Besonders bevorzugt enthalten die erfindungsgemäßen Basislacke mindestens ein hydroxyfunktionelles Polyurethan-Polyacrylat-Mischpolymerisat, nochmals bevorzugt mindestens ein hydroxyfunktionelles Polyurethan-Polyacrylat-Mischpolymerisat sowie mindestens einen hydroxyfunktionellen Polyester.

Der Anteil der weiteren Polymere als Bindemittel kann breit variieren und liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Basislacks.

Zudem enthält der erfindungsgemäße Basislack bevorzugt mindestens ein an sich bekanntes typisches Vernetzungsmittel. Bevorzugt enthält es als Vernetzungsmittel mindestens ein Aminoplastharz und/oder ein blockiertes Polyisocyanat, bevorzugt ein Aminoplastharz. Unter den Aminoplastharzen sind insbesondere Melaminharze bevorzugt.

Der Anteil der Vernetzungsmittel, insbesondere Aminoplastharze und/oder blockierte Polyisocyanate, besonders bevorzugt Aminoplastharze, darunter bevorzugt Melaminharze, liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Basislacks.

Bevorzugt enthält das erfindungsgemäße Beschichtungsmittel zudem mindestens einen Verdicker.

Als Verdicker eignen sich anorganische Verdicker aus der Gruppe der Schichtsilikate wie Lithium-Aluminium-Magnesium Silikate. Bekannt ist allerdings, dass Lacke, deren rheologisches Eigenschaftsprofil über den hauptsächlichen oder überwiegenden Einsatz entsprechender anorganischer Verdicker bestimmt wird, hinsichtlich ihres Festkörpergehalts verbesserungswürdig sind, das heißt lediglich mit recht geringen Festkörpergehalten von beispielsweise kleiner 20 % formuliert werden können, ohne dass wichtige applikationstechnische Eigenschaften verschlechtert werden. Ein besonderer Vorteil des erfindungsgemäßen Basislacks liegt darin, dass er ohne beziehungsweise ohne großen Anteil solcher als Verdicker eingesetzter anorganischen Schichtsilikate formuliert werden kann. Demzufolge ist der Anteil von als Verdicker eingesetzten anorganischen Schichtsilikaten, bezogen auf das Gesamtgewicht des Basislacks, bevorzugt kleiner als 0,5 Gew.-%, insbesondere bevorzugt kleiner 0,1 Gew.-% und nochmals bevorzugt kleiner 0,05 Gew.-%. Ganz besonders bevorzugt ist der Basislack vollständig frei von solchen als Verdicker eingesetzten anorganischen Schichtsilikaten.

Stattdessen enthält der Basislack bevorzugt mindestens einen organischen Verdicker, beispielsweise einen (Meth)acrylsäure-(Meth)acrylat-Copolymerisat-Verdicker oder einen Polyurethan-Verdicker. Bevorzugt eingesetzt werden Assoziativverdicker, wie beispielsweise die an sich bekannten Polyurethan-Assoziativverdicker. Als Assoziativverdicker werden bekanntermaßen wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind in wässriger Phase zur Bildung von Mizellen fähig. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Mizellen in der wässrigen Phase ausbilden. Letztlich wird eine verdickende Wirkung erzielt, ohne dass es zu einem erhöhten Absetzverhalten kommt. Entsprechende Verdicker sind kommerziell erhältlich, beispielsweise unter der Handelsbezeichnung Adekanol (Fa. Adeka Corporation).

Der Anteil der organischen Verdicker liegt vorzugsweise im Bereich von 0,01 bis 5,0 Gew.-%, bevorzugt 0,02 bis 3,0 Gew.-%, besonders bevorzugt 0,05 bis 3,0 Gew.-%, jeweils bezogen auf das Gesamtgewicht des erfindungsgemäßen Basislacks.

Darüber hinaus kann der erfindungsgemäße Basislack noch mindestens einen weiteren Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Polymere als Bindemittel, weitere Vernetzungsmittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Solche Zusatzstoffe werden in den üblichen und bekannten Mengen eingesetzt.

Der Festkörpergehalt des erfindungsgemäßen Basislacks kann je nach den Erfordernissen des Einzelfalls variieren. In erster Linie richtet sich der Festkörpergehalt nach der für die Applikation, insbesondere Spritzapplikation, erforderlichen Viskosität. Es ist von besonderem Vorteil, dass der erfindungsgemäße Basislack bei vergleichsweise hohen Festkörpern trotzdem eine Viskosität aufweisen kann, die eine angemessene Applikation zulässt sowie eine stabile Langzeitviskosität aufweist, die eine gute Lagerstabilität belegt.

Vorzugsweise liegt der Festkörpergehalt des erfindungsgemäßen Basislacks bei mindestens 25 %, bevorzugt mindestens 27,5 %, insbesondere bevorzugt von 27,5 bis 55 %.

Bei den genannten Bedingungen, das heißt bei den genannten Festkörpergehalten, weisen bevorzugte erfindungsgemäße Basislacke bei 23°C und einer Scherbelastung von 1000 1/s eine Viskosität von 40 bis 180 mPa·s, insbesondere 50 bis 150 mPa·s und nochmals besonders bevorzugt von 60 bis 135 mPa·s über einen Zeitraum von 20 Tagen auf (genaueres zur Messmethode siehe Beispielteil). Im Rahmen der vorliegenden Erfindung wird eine Viskosität in diesem Bereich bei der angegebenen Scherbelastung als Langzeitviskosität (Lagerviskosität) bezeichnet. Sie ist ein Maß für die Lagerstabilität des erfindungsgemäßen Basislacks und direkt beeinflusst über die Stabilisierung der Mikrogel-Dispersion durch die spezielle Lösemittelzusammensetzung.

Der erfindungsgemäße Basislack ist wässrig (zur Definition von "wässrig" siehe oben).

Der Anteil von Wasser am erfindungsgemäßen Basislack beträgt bevorzugt mindestens 35 Gew.-%, bevorzugt mindestens 40 Gew.-% und nochmals bevorzugt von 45 bis 60 Gew.-%.

Nochmals bevorzugt ist, dass die prozentuale Summe aus dem Festkörper des Basislacks und dem Anteil von Wasser am Basislack bei mindestens 70 Gew.-%, bevorzugt bei mindestens 80 Gew.-% liegt. Darunter bevorzugt sind Bereiche von 70 bis 90 Gew.-%, insbesondere 80 bis 90 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise ein Basislack einen Festkörper von 35 % und einen Wassergehalt von 50 Gew.-%, so beträgt die oben definierte prozentuale Summe aus dem Festkörper des Basislacks und dem Anteil von Wasser am Basislack 85 Gew.-%.

Dies bedeutet, dass bevorzugte erfindungsgemäße Basislacke grundsätzlich umweltbelastende Komponenten wie insbesondere organische Lösemittel in einem vergleichsweise niedrigen Anteil von beispielsweise weniger als 30 Gew.-%, bevorzugt weniger als 20 Gew.-% enthalten. Bevorzugte Bereiche sind von 10 bis 30 Gew.-%, insbesondere 10 bis 20 Gew.-%.

Der erfindungsgemäß einzusetzende wässrige Basislack ist dadurch gekennzeichnet, dass er, bezogen auf die Gesamtmenge an im Basislack vorhandenen Lösemitteln (L), in Summe weniger als 9 Gew.-% an Lösemitteln ausgewählt aus der Gruppe bestehend aus organischen Lösemitteln (L1) mit einem HLB-Wert zwischen 5 und 15 und einer Wasserlöslichkeit von > 1,5 Gew.-% bei 20°C enthält.

Der HLB-Wert eines Lösemittels (L) beschreibt dabei das Verhältnis der Molmasse des hydrophilen zu lipophilen Anteils (engl. *Hydrophilic - lipophilic balance* nach W. C. Griffin) des Lösemittels, und ist in diesem Kontext definiert über:

$$\text{HLB-Wert (L)} = 20 * (1 - M \text{ (lipophiler Anteil (L))} / M \text{ (L))},$$

wobei den lipophilen Anteil des Lösemittels (L) die folgenden Kohlenstoff-haltigen Gruppen ausmachen:
Jede Gruppe $CH_n$ mit n = 1 bis 3, sofern sich die Gruppe

(i) nicht in alpha Stellung zu OH, $NH_2$, $CO_2H$ befindet,
(ii) nicht in Ethylenoxid-Einheiten, die sich in einer Ethylenoxid-Kette mit einer endständigen OH-Gruppe befindet und/oder
(iii) nicht in einem cyclischen Molekül oder Molekülteil in alpha-Stellung zu einer verbrückenden funktionellen Gruppe ausgewählt aus -O-, NH-, befindet.

Alle anderen Gruppen, beispielsweise andere Kohlenstoff-haltige Gruppen oder nicht Kohlenstoff-haltige Gruppen, gehören demnach zum hydrophilen Anteil.

Ein Lösemittel ist demnach aus einem hydrophilen und/oder lipophilen Anteil aufgebaut. Ist ein Lösemittel lediglich aufgebaut aus einem lipophilen Anteil hat es einen HLB -Wert von 0 (*"null"*). Konsequenterweise geht ein HLB-Wert von 20 mit einem ausschließlichen hydrophilen Anteil einher. Lösemittel mit hydrophilem und lipophilem Anteil haben HLB-Werte zwischen 0 und 20. Dabei wird die Molmasse an lipophilen Gruppen nach den oben angegeben Kriterien bestimmt und durch die Gesamtmolmasse des Lösemittels dividiert. Dieser Anteil wird wie in der HLB-Wert Formel angegeben von dem Wert eins subtrahiert. Das Ergebnis wird mit 20 multipliziert. Beispielhaft erwähnt seien an dieser Stelle die Lösemittel Cyclohexan mit einem HLB-Wert von 0, Iso-Propanol mit einem HLB-Wert von 10,0 und Diethylenglykol mit einem HLB-Wert von 20.

Die im Sinne der Erfindung zu weniger als 9 Gew.-%, besonders bevorzugt zu weniger als 7,5 Gew.-%, insbesondere bevorzugt zu weniger als 6,0 Gew.-% und nochmals insbesondere bevorzugt zu weniger als 5 Gew.-% einzusetzenden Lösemittel (L1), bezogen auf die Gesamtmenge an im Basislack vorhandenen Lösemitteln (L), sind gekennzeichnet durch einen HLB-Wert zwischen 5 und 15 und eine Wasserlöslichkeit von > 1,5 Gew.-% bei 20°C (Messmethode Löslichkeit siehe Beispielteil).

Beispielhaft aber nicht abschließend seien nachfolgende Lösemittel (L1) dieser auf weniger als 9 Gew.-% beschränkten Kategorie mit ihrem jeweiligen HLB-Wert sowie ihre Wasserlöslichkeit in Gew.-% bei 20°C genannt: Ethanol (HLB 13,5; Wasserlöslichkeit unendlich), Butyldiglykol (HLB 13,0; Wasserlöslichkeit unendlich), Tetrahydrofuran (HLB 12,2; Wasserlöslichkeit unendlich), Butylglykol (HLB 10,3; Wasserlöslichkeit unendlich), n-Propanol (HLB 10,3; Wasserlöslichkeit unendlich), Iso-Propanol (HLB 10,0; Wasserlöslichkeit unendlich), Aceton (HLB 9,7; Wasserlöslichkeit unendlich), 1-Methoxy-2-propylacetat (HLB 9,1, Wasserlöslichkeit 22,0), Dipropylenglykol-monomethylether (HLB 8,4; Wasserlöslichkeit unendlich), n-Butanol (HLB 8,4; Wasserlöslichkeit 7,7), Iso-Butanol (HLB 8,4; Wasserlöslichkeit 9,5), 1-Propoxy-2-propanol (HLB 7,8; Wasserlöslichkeit unendlich), Butanon (HLB 7,8, Wasserlöslichkeit 35,3), Cyclohexanon (HLB 5,7; Wasserlöslichkeit 2,3), Methylisobutylketon (HLB 5,6; Wasserlöslichkeit 1,9).

Nur unter Einhaltung der Grenze an Lösemitteln (L1) mit einem HLB-Wert zwischen 5 und 15 und einer Wasserlöslichkeit von > 1,5 Gew.-% bei 20°C von in Summe weniger als 9 Gew.-%, bezogen auf die Gesamtmenge an im Basislack vorhandenen Lösemitteln (L), führt die diffusionsbedingte Quellung durch Aufnahme der spezifizierten Lösemittel in die in der Dispersion (PD) enthaltenen Polyurethan-Polyharnstoff-Partikel unter Volumenvergrößerung und Verlust ihrer Festigkeit nicht zu unerwünschten, speziell rheologischen Effekten, wodurch die zur Aufgabe gesetzte gute Lagerstabilität unter Beibehaltung guter applikationstechnischer Eigenschaften wässriger Basislacke erzielt werden kann (Vgl. Tabelle 3 und 4).

Lösemittel (L) sind dabei im Sinne der Erfindung und im Einklang mit dem Wissen des Fachmanns im Lackbereich (Römpp-Lexikon Lacke und Druckfarben, Georg Thieme Verlag, Stuttgart, New York, 1998, Seite 358-359) definiert als in der Formulierung bei Raumtemperatur (das heißt 20°C) unter Normaldruck (das heißt 1,013 bar) vorliegende, flüssige und flüchtige nicht-ionische Verbindungen. Es sind also Lösemittel gemeint, die unter Einbrennbedingungen den gebildeten Film zu > 10 Gew.-%, bevorzugt zu > 25 Gew.-% und insbesondere bevorzugt zu > 50 Gew% verlassen. Unter Einbrennbedingungen wird an dieser Stelle das Aussetzen des jeweiligen Beschichtungsmittels nach Applikation auf ein Substrat mit einer Temperatur von 140°C für eine Dauer von 20 min verstanden. Unter dieser Definition sind jedenfalls flüchtige organische Lösemittel aber auch Wasser zu verstehen. Kein Lösemittel (L1) im Sinne der Erfindung ist daher z.B. N,N-Dimethylethanolamin.

Beachtet werden sollte ferner, dass das mindestens eine organische Lösemittel (Z.2) und die hier über HLB-Werte und Wasserlöslichkeit spezifizierten Lösemittel (L1) nicht die gleichen Lösemittel beschreiben. Lösemittel (Z.2) können zwar in die Kategorie der Lösemittel (L1) mit einem HLB-Wert zwischen 5 und 15 und einer Wasserlöslichkeit >1,5 Gew.-% bei 20°C fallen, werden aber nach anderen Kriterien ausgewählt (siehe oben).

Ein weiterer Vorteil des erfindungsgemäßen Basislacks liegt darin, dass er ohne den Einsatz von umwelt- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält der Basislack bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist der Basislack vollständig frei von diesen organischen Lösemitteln.

Die Herstellung der erfindungsgemäßen Beschichtungsmittel kann unter Einsatz der für die Herstellung von Basislacken üblichen und bekannten Mischverfahren und Mischaggregaten erfolgen.

Gegenstand der vorliegenden Erfindung ist auch ein Verfahren zur Herstellung von Mehrschichtlackierungen, bei dem

(1) ein wässriger Basislack auf ein Substrat aufgebracht wird,

(2) aus dem in Stufe (1) aufgebrachten Lack ein Polymerfilm gebildet wird,

(3) auf die so erhaltene Basislackschicht ein Klarlack aufgebracht wird und anschließend

(4) die Basislackschicht zusammen mit der Klarlackschicht gehärtet wird,

welches dadurch gekennzeichnet ist, dass der in Stufe (1) eingesetzte wässrige Basislack ein erfindungsgemäßer Basislack ist.

Alle vorstehend genannten Ausführungen hinsichtlich des erfindungsgemäßen Basislacks gelten auch für das erfindungsgemäße Verfahren.

Das besagte Verfahren wird zur Herstellung von farbgebenden Mehrschichtlackierungen, effektgebenden Mehrschichtlackierungen und farb- und effektgebenden Mehrschichtlackierungen eingesetzt.

Die Applikation des erfindungsgemäß einzusetzenden wässrigen Basislacks erfolgt üblicherweise auf mit einem gehärteten Füller vorbeschichteten Metall- oder Kunststoffsubstrat. Gegebenenfalls kann der besagte Basislack auch direkt auf den Kunststoffuntergrund oder in einem integrierten Prozess direkt auf ein mit einer Elektrotauchlackierung beschichtetes Metallsubstrat aufgebracht werden.

Soll ein Metallsubstrat beschichtet werden, so wird dieses vor der Applikation des Füllers bevorzugt noch mit einer Elektrotauchlackierung beschichtet.

Wird ein Kunststoffsubstrat beschichtet, so wird dieses vor der Applikation des Füllers bevorzugt noch vorbehandelt. Die hierzu am häufigsten angewendeten Verfahren sind das Beflammen, die Plasmabehandlung und die Corona-Entladung.

Die Applikation des erfindungsgemäßen pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden in der Regel Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Bevorzugt sind Zweikomponentenklarlacke.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C.

Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in eine bestimmte Schichtdicke aufgetragen wird, so ist darunter zu verstehen, dass der Lack so aufgetragen wird, dass die genannte Schichtdicke nach der Härtung resultiert.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet, um keine Beschädigung und/oder Deformation des Substrats zu erzeugen.

Mit Hilfe des erfindungsgemäßen Verfahrens können also metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen wässrigen Basislacks und des erfindungsgemäßen Verfahrens gelten entsprechend auch für die besagte Mehrschichtlackierung.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert ("Spot Repair") oder komplett überlackiert (Doppellackierung) wird.

Das erfindungsgemäße Verfahren eignet sich demnach auch zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt.

Zudem betrifft die vorliegende Erfindung die Verwendung des erfindungsgemäßen Basislacks enthaltend die spezielle Lösemittelzusammensetzung (L1) zur Verbesserung der Lagerstabilität von Basislacken unter Beibehaltung der guten applikationstechnischen Eigenschaften, insbesondere des guten Nadelstichverhaltens, wovon insbesondere die Verringerung der Nadelstichgrenze bzw. Nadelstichzahl, sowie eine gute Läuferstabilität, der Mehrschichtlackierungen.

Im Folgenden wird die Erfindung anhand von Beispielen erläutert.

Beispiele

Bestimmungsmethoden

1. Feststoffgehalt

Soweit nicht anders angegeben, wurde der Feststoffgehalt, im Folgenden auch als Festanteil bezeichnet, nach DIN EN ISO 3251 bei 130°C; 60 min, Einwaage 1,0 g, bestimmt. Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

**2. Isocyanatgehalt**

Die Ermittlung des Isocyanat-Gehalts, im Folgenden auch als NCO-Gehalt bezeichnet, wurde durch Zugabe eines Überschusses einer 2%igen N,N-Dibutylamin-Lösung in Xylol zu einer homogenen Lösung der Proben in Aceton / N-Ethylpyrrolidon (1:1 Vol.-%) durch potentiometrische Rücktitration des AminÜberschusses mit einer 0,1N Salzsäure in Anlehnung an die DIN EN ISO 3251, DIN EN ISO 11909 und DIN EN ISO 14896 bestimmt. Über den Anteil eines Polymers (Festkörper) in Lösung kann auf den NCO-Gehalt des Polymers bezogen auf Festkörper zurückgerechnet werden.

### 3. Hydroxylzahl

Die Hydroxylzahl wurde in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt, wobei der verbliebene Überschuss an Essigsäureanhydrid nach Acetylierung vollständig hydrolysiert wurde und die Essigsäure mit alkoholischer Kaliumhydroxid-Lösung potentiometrisch zurücktitriert wurde. Acetylierungszeiten von 60 min reichten in allen Fällen aus, um einen vollständigen Umsatz zu garantieren.

### 4. Säurezahl

Die Säurezahl wurde in Anlehnung an die DIN EN ISO 2114 in homogener Lösung aus Tetrahydrofuran (THF) / Wasser (9 Vol.-Teile THF und 1 Vol.-Teil destilliertes Wasser) mit ethanolischer Kaliumhydroxid-Lösung bestimmt.

### 5. Neutralisationsgrad

Der Neutralisationsgrad einer Komponente x wurde berechnet aus der Stoffmenge der in der Komponente enthaltenen Carbonsäuregruppen (bestimmt über die Säurezahl) und der Stoffmenge des eingesetzten Neutralisationsmittels.

### 6. Aminäquivalentmasse

Die Aminäquivalentmasse (Lösung) dient der Ermittlung des Amingehalts einer Lösung und wurde wie folgt bestimmt. Es wurde die zu untersuchende Probe bei Raumtemperatur in Eisessig gelöst und gegen 0,1N Perchlorsäure in Eisessig in Gegenwart von Kristallviolett titriert. Aus der Einwaage der Probe und dem Verbrauch an Perchlorsäure erhielt man die Aminäquivalentmasse (Lösung), die Masse der Lösung des basischen Amins, die nötig ist, ein Mol Perchlorsäure zu neutralisieren.

### 7. Maskierungsgrad der primären Aminogruppen

Der Maskierungsgrad der primären Aminogruppen wurde mittels IR-Spektrometrie mit einem FT-IR-Spektrometer Nexus (Fa. Nicolet) unter Zuhilfenahme einer IR-Küvette (d=25mm, KBr-Fenster) am Absorptionsmaximum bei 3310 cm-1 anhand von Konzentrationsreihen der verwendeten Amine und Normierung auf das Absorptionsmaximum bei 1166 cm-1 (interner Standard) bei 25°C ermittelt.

### 8. Lösungsmittelgehalt

Der Gehalt eines organischen Lösungsmittels an einer Mischung, beispielsweise einer wässrigen Dispersion, wurde mittels Gaschromatographie (Agilent 7890A, 50m Silica-Kapillarsäule mit Polyethylenglykol-Phase bzw. 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) ermittelt.

### 9. Zahlenmittlere Molmasse

Die zahlenmittlere Molmasse (Mn) wurde, soweit nicht anders angegeben, mittels eines Dampfdruckosmometers Typ 10.00 (Fa. Knauer) an Konzentrationsreihen in Toluol bei 50°C mit Benzophenon als Eichsubstanz zur Bestimmung der experimentellen Eichkonstante des eingesetzten Messgeräts nach E. Schröder, G. Müller, K.-F. Arndt, "Leitfaden der Polymercharakterisierung", Akademie-Verlag, Berlin, S. 47 - 54, 1982, ermittelt.

### 10. Mittlere Partikelgröße

Die mittlere Partikelgröße (Volumenmittel) der in den erfindungsgemäß einzusetzenden Dispersionen (PD) enthaltenen Polyurethan-Polyharnstoff-Partikel werden im Rahmen der vorliegenden Erfindung durch Lichtstreuung bestimmt. Konkret zur Messung eingesetzt wurde die Photonenkorrelationsspektroskopie (PCS).

Verwendet wurde ein "Malvern Nano S90" (Fa. Malvern Instruments) bei 25 ± 1 °C. Das Gerät deckt einen Größenbereich von 3 bis 3000 nm ab und war ausgestattet mit einem 4mW He-Ne Laser bei 633 nm. Die Dispersionen (PD) wurden soweit mit partikelfreiem, deionisiertem Wasser als Dispergiermedium verdünnt, um sie anschließend in einer 1 ml Polystyrol-Küvette bei geeigneter Streuintensität zu vermessen. Die Auswertung erfolgte mittels digitalem Korrelator unter Zuhilfenahme der Auswertungssoftware Zetasizer Vers. 6.32 (Fa. Malvern Instruments). Es wurde fünf Mal gemessen und die Messungen an einer zweiten, frisch präparierten Probe wiederholt. Die Standardabweichung einer 5-fach Bestimmung betrug ≤ 4 %. Die maximale Abweichung des arithmetischen Mittels des Volumenmittels (V-average mean) von fünf Einzelmessungen betrug ± 15 %. Die angegebene mittlere Partikelgröße (Volumenmittel) ist das arithmetische Mittel aus der mittleren Partikelgröße (Volumenmittel) der Einzelpräparationen. Die Überprüfung erfolgte mit Polystyrol-Standards mit zertifizierten Partikelgrößen zwischen 50 bis 3000 nm.

## 11. Gelanteil

Der Gelanteil der in den erfindungsgemäß einzusetzenden Dispersionen (PD) enthaltenen Polyurethan-Polyharnstoff-Partikel (Mikrogel-Partikel) wird im Rahmen der vorliegenden Erfindung gravimetrisch bestimmt. Dabei wurde zunächst aus einer Probe einer wässrigen Dispersion (PD) (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen .

Es wurde ferner sichergestellt, dass bei der Sintertemperatur von 130°C und Variation der Sinterzeiten zwischen einer Minute und zwanzig Minuten der ermittelte Gelanteil der Mikrogel-Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Der auf diese Weise erfindungsgemäß bestimmte Gelanteil wird auch Gelanteil (gefriergetrocknet) genannt und wird in Gew.-% angegeben. Denn augenscheinlich handelt es sich um denjenigen auf das Gewicht bezogenen Anteil der Polyurethan-Polyharnstoff-Partikel, der wie Eingangs beschrieben vernetzt ist und damit als Gel isolierbar ist.

Parallel wurde ein Gelanteil, im Folgenden auch als Gelanteil (130°C) bezeichnet, gravimetrisch bestimmt, indem aus wässriger Dispersion (Einwaage 1,0 g) eine Polymerprobe bei 130°C, 60 min (Festkörper) isoliert wurde. Die Masse des Polymeren wurde bestimmt, um das Polymer anschließend analog zur oben beschriebenen Prozedur 24 Stunden bei 25°C in einem Überschuss an Tetrahydrofuran zu extrahieren, den unlöslichen Anteil (Gelanteil) abzutrennen, zu trocknen und zurück zu wiegen.

## 12. Löslichkeit in Wasser

Die Löslichkeit eines organischen Lösemittels in Wasser wurde bei 20°C wie folgt bestimmt. Das jeweilige organische Lösemittel und Wasser wurden in einem geeigneten Glasgefäß zusammengeben, vermischt und das Gemisch anschließend äquilibriert. Dabei wurden die Mengen von Wasser und dem Lösemittel so gewählt, dass sich nach der Äquilibrierung zwei voneinander getrennte Phasen ergaben. Nach der Äquilibrierung wird über eine Spritze eine Probe aus der wässrigen Phase (das heißt der Phase, die mehr Wasser als organisches Lösemittel enthält) entnommen, im Verhältnis 1/10 mit Tetrahydrofuran verdünnt und mittels Gaschromatographie der Anteil des Lösemittels bestimmt (Bedingungen siehe Punkt 8. Lösungsmittelgehalt).

Sofern sich unabhängig von den Mengen von Wasser und dem Lösemittel keine zwei Phasen ausbilden, ist das Lösemittel in jeglichem Gewichtsverhältnis mit Wasser mischbar. Dieses somit unbegrenzt in Wasser lösliche Lösemittel (beispielsweise Aceton), ist daher jedenfalls kein Lösemittel (Z.2). Die Definition der Lösungsmittel (Z.2) ist weiter oben im Text beschrieben.

**Herstellung eines Polyurethan-Polyharnstoff-Mikrogels (bzw. einer Polyurethan-Polyharnstoff Dispersion (PD))**

**Beispiel D1**

**Herstellung eines erfindungsgemäß einzusetzenden Mikrogels eines Polyesterurethan-harnstoffs durch Zugabe von Diethylentriamindiketimin zum Überschuss eines teilneutralisierten, m-Tetramethylxyloldiisocyanatbasierenden Polyurethan-Präpolymeren in Methylethylketon und nachfolgender Vernetzung über endständige, primäre Aminogruppen nach Dispergierung in Wasser.**
Eine Mikrogel-Dispersion eines Polyesterurethanharnstoffs wurde folgendermaßen hergestellt:

a) Herstellung einer teilneutralisierten Präpolymerlösung

In einem Reaktionsgefäß, ausgerüstet mit Rührer, Innenthermometer, Rückflußkühler und elektrischer Heizung, wurden 570,0 Gewichtsteile eines linearen Polyesterpolyols und 27,7 Gewichtsteile Dimethylolpropionsäure (Fa. GEO Speciality Chemicals) in 344,4 Gewichtsteilen Methylethylketon unter Stickstoff gelöst. Das lineare Polyesterdiol wurde zuvor aus dimerisierter Fettsäure (Pripol® 1012, Fa. Croda), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil, eine Säurezahl von 3,5 mg KOH / g Festanteil und eine berechnete, zahlenmittlere Molmasse von 1379 g/mol und eine über Dampfdruckosmometrie bestimmte zahlenmittlere Molmasse von 1350 g/mol auf.
Zu der resultierenden Lösung wurden bei 30°C hintereinander 202,0 Gewichtsteile m-Tetramethylxyloldiisocyanat (TMXDI® (Meta) Aliphatic Isocyanate, Fa. Cytec) mit einem Isocyanatgehalt von 34,40 Gew.-% und 3,8 Gewichtsteile Dibutylzinndilaurat (Fa. Merck) hinzugegeben. Anschließend wurde unter Rühren auf 80°C erwärmt. Es wurde bei dieser Temperatur weiter gerührt, bis der Isocyanatgehalt der Lösung 1,51 Gew.-% betrug und konstant war. Danach wurden 626,4 Gewichtsteile Methylethylketon zum Präpolymer gegeben und das Reaktionsgemisch auf 40°C abgekühlt. Nach Erreichen von 40°C wurden 12,0 Gewichtsteile Triethylamin (Fa. BASF SE) innerhalb von zwei Minuten zugetropft und weitere 5 Minuten der Ansatz gerührt.

b) Umsetzung des Präpolymeren mit Diethylentriamindiketimin

Anschließend wurden 30,8 Gewichtsteile einer 71,9 Gew.-% Anlösung von Diethylentriamindiketimin in Methylisobutylketon (Verhältnis Isocyanatgruppen des Präpolymeren zu Diethylentriamindiketimin (mit einer sekundären Aminogruppe): 5 : 1 mol/mol, entspricht zwei NCO-Gruppen pro blockierter, primärer Aminogruppe) innerhalb einer Minute zugemischt, wobei die Reaktionstemperatur nach Zugabe zur Präpolymerlösung kurzzeitig um 1°C anstieg. Die Anlösung von Diethylentriamindiketimin in Methylisobutylketon wurde zuvor durch azeotropes Auskreisen von Reaktionswasser bei der Reaktion von Diethylentriamin (Fa. BASF SE) mit Methylisobutylketon in Methylisobutylketon bei 110 - 140°C hergestellt.
Durch Verdünnen mit Methylisobutylketon wurde auf eine Aminäquivalentmasse (Lösung) von 124,0 g/eq eingestellt. Mittels IR-Spektroskopie wurde anhand der Restabsorption bei 3310 cm$^{-1}$ eine Blockierung der primären Aminogruppen von 98,5% ermittelt.
Der Feststoffgehalt der Isocyanatgruppen-haltigen Polymerlösung wurde mit 45,0 % bestimmt.

c) Dispergierung und Vakuumdestillation

Nach 30 Minuten Rühren bei 40°C wurde der Inhalt des Reaktors innerhalb von 7 Minuten in 1206 Gewichtsteile deionisiertes Wasser (23°C) dispergiert. Aus der resultierenden Dispersion wurde Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.
Es wurde eine weiße, stabile, feststoffgehaltreiche, niedrigviskose Dispersion mit vernetzten Partikeln erhalten, die auch nach 3 Monaten keinerlei Absetzen aufwies.
Die so erhaltene Mikrogel-Dispersion wies folgende Kennzahlen auf:

| | |
|---|---|
| Feststoffgehalt (130°C, 60min, 1g): | 39,6 Gew.-% |
| Methylethylketon-Gehalt (GC): | 0,3 Gew.-% |
| Methylisobutylketon-Gehalt (GC): | 0,1 Gew.-% |
| Viskosität (23°C, Rotationsviskosimeter, Scherrate= 1000/s): | 15 mPas |

(fortgesetzt)

| Säurezahl | 17,1 mg KOH / g Feststoffgehalt |
| Neutralisationsgrad (berechnet) | 49 % |
| pH (23°C) | 7,4 |
| Partikelgröße (Photokorrelationsspektroskopie, Volumenmittel) | 156 nm |
| Gelanteil (gefriergetrocknet) | 83,3 Gew.-% |
| Gelanteil (130°C) | 83,7 Gew.-% |

**Vergleichsbeispiel VD1**

**Herstellung einer Dispersion eines Polyesterurethans, die keine vernetzten Partikel enthält, durch Dispergierung einer Methylethylketon-Lösung eines teilneutralisierten, Dicyclohexylmethan-4,4'-diisocyanat-basierenden Polyesterurethans**

Eine Standard-Polyurethandispersion VD1 wurde auf Basis Dicyclohexylmethan-4,4'-diisocyanat gemäß WO 92/15405, Seite 15, Zeile 16-20, hergestellt.

Die so erhaltene Polyurethan-Dispersion wies folgende Kennzahlen auf:

| Feststoffgehalt (130°C, 60min, 1g): | 27,0 Gew.-% |
| Methylethylketon-Gehalt (GC): | 0,2 Gew.-% |
| Viskosität (23°C, Rotationsviskosimeter, Scherrate= 1000/s): | 135 mPa.s |
| Säurezahl | 19,9 mg KOH / g Feststoffgehalt |
| pH (23°C) | 7,8 |
| Partikelgröße (Photokorrelationsspektroskopie, Volumenmittel) | 46 nm |
| Gelanteil (gefriergetrocknet) | -0,7 Gew.-% |
| Gelanteil (130°C) | -0,3 Gew.-% |

**Herstellung von Wasserbasislacken**

Für den Applikationsvergleich wurde ein Standard-Wasserbasislack BL-V1 mit der Polyurethandispersion VD1 (gemäß WO 92/15405, Seite 15, Zeile 16-20) hergestellt, die keine vernetzten Partikel enthält. Im Gegensatz zu allen erfindungsgemäßen Wasserbasislacken und den weiteren Vergleichs-Wasserbasislacken enthält BL-V1 einen Schichtsilikat-Verdicker, um das senkrechte Ablaufen vom Blech während der Applikation und Trocknung zu verhindern.

Schichtsilikat-freie Vergleichs-Wasserbasislacke BL-V2 bis BL-V6 wurden zu Vergleichszwecken angesetzt auf Basis der erfindungsgemäß einzusetzenden Dispersion (PD) D1, enthaltend also vernetzte Partikel. Alle Vergleichs-Wasserbasislacke enthalten, bezogen auf die Gesamtmenge an im Basislack vorhandenen Lösemitteln (L), in Summe mehr als 9 Gew.-% an Lösemitteln ausgewählt aus der Gruppe bestehend aus Lösemitteln (L1) mit einem HLB-Wert zwischen 5 und 15 und einer Wasserlöslichkeit von > 1,5 Gew.-% bei 20°C. Bei BL-V2 bis BL-V6 handelt es sich also nicht um erfindungsgemäße Wasserbasislacke. Erfindungsgemäße Wasserbasislacke BL-E1 bis BL-E9 wurden auf Basis der Dispersion (PD) D1 angesetzt, die im Gegensatz zu den Vergleichs-Wasserbasislacken BL-V2 bis BL-V6, bezogen auf die Gesamtmenge an im Basislack vorhandenen Lösemitteln (L), in Summe weniger als 9 Gew.-% an Lösemitteln ausgewählt aus der Gruppe bestehend aus Lösemitteln (L1) mit einem HLB-Wert zwischen 5 und 15 und einer Wasserlöslichkeit von >1,5 Gew.-% bei 20°C beinhalten.

Im Nachfolgenden wird die Herstellung der Wasserbasislacke detailliert beschrieben.

**Herstellung eines silberblauen Wasserbasislacks BL-V1 als Vergleichsbeispiel auf Basis einer Polyurethan-Dispersion VD1 mit Polyurethan-Partikeln, die nicht vernetzt sind, und direkt als farbgebende Schicht auf einen gehärteten Füller, direkt auf einen Kunststoffuntergrund oder direkt auf ein mit einer Elektrotauchlackierung beschichtetes Metallsubstrat aufgetragen werden kann**

Die in der Tabelle 1 unter "wässrige Phase" aufgeführten Komponenten werden in der vorgegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und N,N-Dimethylethanolamin (Fa. BASF SE) auf einen pH-Wert von 8,1 und einer Hochscher-Viskosität von 58 mPas bei einer Scherbelastung von 1000 s$^{-1}$, gemessen mit einem Rotations-Viskosimeter (Gerät Rheomat RM 180 der Firma Mettler-Toledo) bei 23°C, eingestellt. Hierbei wurde ein Festkörpergehalt von 17,6 Gew.-% erzielt. Die zu den eingesetzten Lösemitteln (L1) gehörenden HLB-Werte und entsprechenden Wasserlöslichkeiten wurden bereits weiter oben in der Beschreibung angegeben.

**Tabelle 1:**

| Herstellung eines silberblauen Wasserbasislacks BL-V1 | |
| --- | --- |
| **Bezeichnung des Wasserbasislacks** | **BL-V1** |
| **Komponente** | **Gewichtsteile** |
| **WÄSSRIGE PHASE** | |
| Wässrige Lösung von 3% Natrium-Lithium-Magnesium-Schichtsilikat Laponite® RD (Fa. Altana-Byk) und 3% Pluriol® P900 (Fa. BASF SE) | 24,7 |
| VD-1 Polyurethandispersion, hergestellt gemäß Seite 15, Zeile 16-20 der | 18 |
| WO 92/15405 | |
| Hydroxyfunktioneller Polyester; hergestellt gemäß Beispiel D, Spalte 16, Z. 37-59 der DE-A-4009858 | 3,2 |
| Luwipal@ 052 (Fa. BASF SE), Melamin-Formaldehyd-Harz | 4,3 |
| TMDD 50% BG (Fa. BASF SE), 52%ige Lösung von 2,4,7,9-Tetramethyl-5-decin-4,7-diol in Butylglykol | 1,9 |
| 10%ige Lösung von N,N-Dimethylethanolamin (Fa. BASF SE) in Wasser | 0,8 |
| Butylglykol (Fa. BASF SE) | 5,7 |
| Hydroxyfunktionelles polyurethanmodifiziertes Polyacrylat; hergestellt gemäß S. 7, Z. 55 bis S.8, Z. 23 der DE 4437535 A1 | 4,7 |
| 10 Gew.-%ige Lösung Rheovis® AS 1130 (BASF SE) Rheologiemittel | 4 |
| 50 Gew.-%ige Lösung Rheovis® PU 1250 (BASF SE) Rheologiemittel | 0,47 |
| Isopropanol (Fa. BASF SE) | 1,9 |
| Triethylenglykol (Fa. BASF SE) | 2,4 |
| 2-Ethylhexanol (Fa. BASF SE) | 2 |
| Isopar® L (Fa. ExxonMobil Chemical), Lösungsmittel (isoparaffinischer Kohlenwasserstoff | 1 |
| Rußpaste | 4,3 |
| Blaupaste | 6,9 |
| Rotpaste | 0,23 |
| Interferenzpigment-Schlämme | |
| Iriodin® 9119 Polarweiß SW (Fa. Merck), ein silberweißes Interferenzpigment; Glimmer, beschichtet mit Rutil ($TiO_2$) | 1 |
| Iriodin® 9225 SQB Rutil Perlblau SW (Fa. Merck), ein blaues Interferenzpigment; Glimmer, beschichtet mit Rutil ($TiO_2$) | 0,06 |
| Mischlack, hergestellt gemäß Spalte 11, Zeile 1-17 der EP 1534792 - B1 | 3,2 |
| Deionisiertes Wasser | 7,98 |
| **ORGANISCHE PHASE** | |
| Mischung zweier handelsüblicher Aluminium-pigmente STAPA Hydrolux 1071 Aluminium u. STAPA Hydrolux VP Nr. 56450/G Aluminium (Fa. Eckart Effect Pigments) | 0,36 |
| Butylglykol (Fa. BASF SE) | 0,5 |
| Hydroxyfunktioneller Polyester; hergestellt gemäß Beispiel D, Spalte 16, Z. 37-59 der DE-A-4009858 | 0,3 |

(fortgesetzt)

| ORGANISCHE PHASE | |
|---|---|
| | |
| 10%ige Lösung von N,N-Dimethylethanolamin (Fa. BASF SE) in Wasser (zur Einstellung von pH-Wert und Spritzviskosität) | 0,1 |

Herstellung von erfindungsgemäßen Wasserbasislacken (BL-E1 bis BL-E6) enthaltend das Polyurethanharnstoff-Mikrogel D1 und, bezogen auf die Gesamtmenge an im Basislack vorhandenen Lösemitteln (L), in Summe weniger als 9 Gew.-% an Lösemitteln ausgewählt aus den Lösemitteln (L1) mit einem HLB-Wert zwischen 5 und 15 und einer Wasserlöslichkeit von >1,5 Gew.-% bei 20°C sowie von Vergleichs-Wasserbasislacken (BL-V2 bis BL-V6) enthaltend das Polyurethanharnstoff-Mikrogel D1 und, bezogen auf die Gesamtmenge an im Basislack vorhandenen Lösemitteln (L), in Summe mehr als 9 Gew.-% an Lösemitteln ausgewählt aus den Lösemitteln (L1) mit einem HLB-Wert zwischen 5 und 15 und einer Wasserlöslichkeit von >1,5 Gew.-% bei 20°C, welche direkt als farbgebende Schicht auf einen gehärteten Füller, direkt auf einen Kunststoffuntergrund oder direkt auf ein mit einer Elektrotauchlackierung beschichtetes Metallsubstrat aufgetragen werden können.

Die in Tabelle 2a und 2b unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung hinzugegeben. Sodann wird 10 Minuten lang gerührt und mit Hilfe von deionisiertem Wasser und N,N-Dimethylethanolamin (Fa. BASF SE) auf einen pH Wert von 8 und eine Hochscher-Viskosität von 58 mPas bei einer Scherbelastung von 1000 s$^{-1}$, gemessen mit einem Rotations-Viskosimeter (Gerät Rheomat RM 180 der Firma Mettler-Toledo) bei 23°C, eingestellt.

**Tabelle 2a:**

| Herstellung von Vergleichs-Wasserbasislacken BL-V2 bis BL-V6. | | | | | |
|---|---|---|---|---|---|
| Bezeichnung des Wasserbasislacks | BL-V2 | BL-V3 | BL-V4 | BL-V5 | BL-V6 |
| Komponente: | Gewichtsteile | | | | |
| WÄSSRIGE PHASE | | | | | |
| Deionisiertes Wasser | 18,6 | 18,6 | 18,6 | 18,6 | 18,6 |
| Hydroxyfunktioneller Polyester; hergestellt gemäß Beispiel D, Spalte 16, Z. 37-59 der DE 4009858 A1 | 5,8 | 5,8 | 5,8 | 5,8 | 5,8 |
| Luwipal@ 052 (Fa. BASF SE), Melamin-Formaldehyd-Harz | 7,8 | 7,8 | 7,8 | 7,8 | 7,8 |
| Butylglykol (Fa. BASF SE) | 5,4 | 10,8 | | | |
| iso-Butanol | | | 10,8 | | |
| Butyldiglykol | | | | 10,8 | |
| iso-Propanol | | | | | 10,8 |
| TMDD (Fa. BASF SE) | 2 | 2 | 2 | 2 | 2 |
| 10%ige Lösung von N,N-Dimethylethanolamin (Fa. BASF SE) in Wasser | 0,5 | 0,5 | 0,5 | 0,5 | 0,5 |
| Hydroxyfunktionelles polyurethanmodifiziertes Polyacrylat; hergestellt gemäß S. 7, Z. 55 bis S.8, Z. 23 der DE 4437535 A1 | 8,5 | 8,5 | 8,5 | 8,5 | 8,5 |
| 50 Gew.-%ige Lösung Rheovis® PU 1250 (Fa. BASF SE) in Wasser Rheologiemittel | 0,8 | 0,8 | 0,8 | 0,8 | 0,8 |
| PU-Mikrogel-Dispersion gemäß Herstellbeispiel D1 | 20 | 20 | 20 | 20 | 20 |
| Rußpaste | 7,8 | 7,8 | 7,8 | 7,8 | 7,8 |
| Blaupaste | 12,5 | 12,5 | 12,5 | 12,5 | 12,5 |
| Rotpaste | 0,4 | 0,4 | 0,4 | 0,4 | 0,4 |

(fortgesetzt)

| Herstellung von Vergleichs-Wasserbasislacken BL-V2 bis BL-V6. | | | | | |
|---|---|---|---|---|---|
| Bezeichnung des Wasserbasislacks | BL-V2 | BL-V3 | BL-V4 | BL-V5 | BL-V6 |
| Komponente: | Gewichtsteile | | | | |
| **WÄSSRIGE PHASE** | | | | | |
| Mica-Schlämme gemäß EP 1534792 B1 - Spalte 11, Zeile 1-17 | 7,7 | 7,7 | 7,7 | 7,7 | 7,7 |
| | | | | | |
| **ORGANISCHE PHASE:** | | | | | |
| Aluminiumpigment, erhältlich von Firma Altana-Eckart | 0,7 | 0,7 | 0,7 | 0,7 | 0,7 |
| 2-Ethylhexanol | 0,9 | 0,9 | 0,9 | 0,9 | 0,9 |
| Hydroxyfunktioneller Polyester; hergestellt gemäß Beispiel D, Spalte 16, Z. 37-59 der DE 4009858 A1 | 0,5 | 0,5 | 0,5 | 0,5 | 0,5 |
| | | | | | |
| 10%ige Lösung von N,N-Dimethylethanolamin (Fa. BASF SE) in Wasser (zur Einstellung von pH-Wert und Spritzviskosität) | 0,1 | 0,1 | 0,1 | 0,1 | 0,1 |

**Tabelle 2b:**

| Herstellung von erfindungsgemäßen Wasserbasislacken BL-E1 bis BL-E6. | | | | | | |
|---|---|---|---|---|---|---|
| Bezeichnung des Wasserbasislacks | BL-E1 | BL-E2 | BL-E3 | BL-E4 | BL-E5 | BL-E6 |
| Komponente: | Gewichtsteile | | | | | |
| **WÄSSRIGE PHASE** | | | | | | |
| Deionisiertes Wasser | 18,6 | 18,6 | 18,6 | 18,6 | 19,8 | 19,8 |
| Hydroxyfunktioneller Polyester; hergestellt gemäß Beispiel D, Spalte 16, Z. 37-59 der DE 4009858 A1 | 5,8 | 5,8 | 5,8 | 5,8 | | |
| Hydroxyfunktioneller Polyester; hergestellt gemäß Beispiel Bl1, Seite 8, Paragraph 146 der US 2014/0065428 A1 | | | | | 3,48 | 3,48 |
| Luwipal@ 052 (Fa. BASF SE), Melamin-Formaldehyd-Harz | 7,8 | 7,8 | 7,8 | 7,8 | 7,8 | |
| Cymel® 385 (Fa. Cytec), Melamin-Formaldehyd-Harz | | | | | | 7,64 |
| 2-Ethylhexanol | 10,8 | | | | 11,96 | 11,96 |
| Diisobutylketon | | 10,8 | | | | |
| Isopar® L | | | 10,8 | | | |
| Triethylenglykol | | | | 10,8 | | |
| TMDD (Fa. BASF SE) | 2 | 2 | 2 | 2 | 2 | 2 |
| 10%ige Lösung von N,N-Dimethylethanolamin (Fa. BASF SE) in Wasser | 0,5 | 0,5 | 0,5 | 0,5 | 0,5 | 0,5 |
| Hydroxyfunktionelles polyurethanmodifiziertes Polyacrylat; hergestellt gemäß S. 7, Z. 55 bis S.8, Z. 23 der DE 4437535 A1 | 8,5 | 8,5 | 8,5 | 8,5 | 8,5 | 8,5 |
| 50 Gew.-%ige Lösung Rheovis® PU 1250 (Fa. BASF SE) in Wasser Rheologiemittel | 0,8 | 0,8 | 0,8 | 0,8 | 0,8 | 0,8 |
| PU-Mikrogel-Dispersion gemäß Herstellbeispiel D1 | 20 | 20 | 20 | 20 | 20 | 20 |

(fortgesetzt)

| Herstellung von erfindungsgemäßen Wasserbasislacken BL-E1 bis BL-E6. | | | | | | |
|---|---|---|---|---|---|---|
| Bezeichnung des Wasserbasislacks | BL-E1 | BL-E2 | BL-E3 | BL-E4 | BL-E5 | BL-E6 |
| Komponente: | Gewichtsteile | | | | | |
| **WÄSSRIGE PHASE** | | | | | | |
| Rußpaste | 7,8 | 7,8 | 7,8 | 7,8 | 7,8 | 7,8 |
| Blaupaste | 12,5 | 12,5 | 12,5 | 12,5 | 12,5 | 12,5 |
| Rotpaste | 0,4 | 0,4 | 0,4 | 0,4 | 0,4 | 0,4 |
| Mica-Schlämme gemäß EP 1534792 B1 -Spalte 11, Zeile 1-17 | 7,7 | 7,7 | 7,7 | 7,7 | 7,7 | 7,7 |
| | | | | | | |
| **ORGANISCHE PHASE:** | | | | | | |
| Aluminiumpigment, erhältlich von Firma Altana-Eckart | 0,7 | 0,7 | 0,7 | 0,7 | 0,7 | 0,7 |
| 2-Ethylhexanol | 0,9 | 0,9 | 0,9 | 0,9 | 0,9 | 0,9 |
| Hydroxyfunktioneller Polyester; hergestellt gemäß Beispiel D, Spalte 16, Z. 37-59 der DE 4009858 A1 | 0,5 | 0,5 | 0,5 | 0,5 | 0,5 | 0,5 |
| | | | | | | |
| 10%ige Lösung von N,N-Dimethylethanolamin (Fa. BASF SE) in Wasser (zur Einstellung von pH-Wert und Spritzviskosität) | 0,1 | 0,1 | 0,1 | 0,1 | 0,1 | 0,1 |

**Herstellung der Rußpaste:**

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

**Herstellung der Rotpaste:**

Die Rotpaste wurde aus 40 Gewichtsteilen einer gemäß der internationalen Patentanmeldung WO 91/15528 Bindemitteldispersion A hergestellten acrylierten Polyurethandispersion, 34,5 Gewichtsteilen Cinilex® DPP Rot, 2 Gewichtsteilen eines handelsüblichen Polyethers (Pluriol® P900 der Firma BASF SE), 3% Gewichtsteilen 1-Propoxy-2-propanol und 20,5 Gewichtsteilen deionisiertem Wasser hergestellt.

**Herstellung der Blaupaste:**

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

**Vergleichsversuche zwischen den erfindungsgemäßen Wasserbasislacken BL-E1 bis BL-E6 mit den Wasserbasislacken BL-V1 bis BL-V2 in Hinblick auf die Läufer-, Kocher- und Nadelstichgrenze sowie der Nadelstichzahl.**

Zur Bestimmung der applikationstechnischen Eigenschaften (Läufer-, Kocher-, und Nadelstichgrenze sowie Nadelstichzahl) wurden Mehrschichtlackierungen unter Einsatz der Wasserbasislacke (BL-V1 bis BL-V2 sowie BL-E1 bis BL-E6) nach der folgenden allgemeinen Vorschrift hergestellt:

Ein mit einer gehärteten Füllerlackierung beschichtetes Stahlblech der Abmessungen 30 cm x 50 cm wurde an einer Längskante mit einem Klebstreifen versehen, um nach der Beschichtung die Schichtdickendifferenzen ermitteln zu können. Der Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein von der BASF Coatings GmbH kommerziell erhältlicher Zweikomponenten-Klarlack ProGloss® appliziert. Die resultierende Klarlackschicht wurde während 20 Minuten bei Raumtemperatur abgelüftet. Anschließend wurden Wasserbasislackschicht und Klarlackschicht in einem Umluftofen 20 Minuten bei 140°C gemeinsam gehärtet. Die Schichtdicke der gehärteten Klarlackschicht war über das gesamte Blech konstant ($\pm$ 1 $\mu$m) bei einer Klarlackschichtdicke von 35 bis 45 $\mu$m.

Im Falle der Bestimmung der Kochergrenze, Nadelstichgrenze und Nadelstichzahl wurden die Bleche waagerecht im Umluftofen getrocknet und gehärtet und visuell die Kocher- und Nadelstichgrenze ermittelt, indem die resultierende Schichtdicke der keilförmig ansteigenden Basislackschicht bestimmt wurde, ab der erstmals Kocher bzw. Nadelstiche auftraten. Darüber hinaus wurde bei der Nadelstichzahl die Anzahl der Nadelstiche ermittelt, die auf dem beschichteten Blech mit der Kantenlänge 30 cm x 50 cm auftraten.

Im Falle der Ermittlung der Läufergrenze wurden Lochbleche gleicher Dimension aus Stahl eingesetzt, die Bleche wie oben beschrieben beschichtet und die applizierten Lacke wie oben beschrieben getrocknet sowie gehärtet, wobei allerdings jeweils nach Wasserbasislack- und Klarlackapplikation die Bleche senkrecht im Ofen aufgestellt wurden.

Die Schichtdicke, ab welcher Läufer auftreten, wird als Läufergrenze bezeichnet und wurde visuell ermittelt.

Tabelle 3 gibt einen Überblick über die Ergebnisse der Bestimmung der Läufer-Kocher-, und Nadelstichgrenze sowie der Nadelstichzahl:

Während Wasserbasislack BL-V1 keine vernetzten Partikel aufwies und ein Schichtsilikat-Verdicker Laponite® RD enthielt, waren alle weiteren Wasserbasislacke frei von dieser Verdickerkomponente und enthielten die erfindungsgemäß einzusetzenden vernetzten Polyurethan-Harnstoff-Dispersion D1. Während die Vergleichswasserbasislacke BL-V1 und BL-V2, bezogen auf die Gesamtmenge an im Basislack vorhandenen Lösemitteln (L), in Summe mehr als 9 Gew.-% an Lösemitteln ausgewählt aus der Gruppe bestehend aus Lösemitteln (L1) mit einem HLB-Wert zwischen 5 und 15 und einer Wasserlöslichkeit von >1,5 Gew.-% bei 20°C enthalten, weisen die erfindungsgemäß hergestellten Wasserbasislacke BL-E1 bis BL-E6, bezogen auf die Gesamtmenge an im Basislack vorhandenen Lösemitteln (L), in Summe weniger als 9 Gew.-% an Lösemitteln ausgewählt aus der Gruppe bestehend aus Lösemitteln (L1) mit einem HLB-Wert zwischen 5 und 15 und einer Wasserlöslichkeit von > 1,5 Gew.-% bei 20°C auf.

**Tabelle 3:**

| Ergebnisse der Bestimmung der Läufer-, Kocher- und Nadelstichgrenze sowie der Nadelstichzahl der Mehrschichtlackierungen auf Basis der Wasserbasislacke BL-V1 bis BL-V2 und BL-E1 bis BL-E6. | | | | | | | | |
|---|---|---|---|---|---|---|---|---|
| **Bezeichnung des Wasserbasislacks** | **BL-V1** | **BL-V2** | **BL-E1** | **BL-E2** | **BL-E3** | **BL-E4** | **BL-E5** | **BL-E6** |
| Polyurethandispersion | VD1 | D1 | D1 | D1 | D1 | D1 | D1 | D1 |
| Enthält Laponite® RD - Verdicker - Lösung[1] | Ja | Nein | Nein | Nein | Nein | Nein | Nein | Nein |
| Gehalt in Gew.-%, bezogen auf die Gesamtmenge an im Basislack vorhandenen Lösemitteln (L), an Lösemittel (L1) mit HLB-Wert zwischen 5 und 15 und einer Wasserlöslichkeit > 1,5 Gew.-% bei 20°C | >9 | 17,60 | 8,52 | 8,52 | 8,52 | 8,52 | 6,86 | 4,41 |
| Läufergrenze in $\mu$m [2] | 23 | > 60 | > 60 | > 60 | > 60 | > 60 | > 60 | > 60 |
| Kochergrenze in $\mu$m [3] | 12 | 31 | 34 | 37 | 35 | 32 | 39 | 38 |
| Nadelstichgrenze in $\mu$m [4] | 16 | 30 | 31 | 33 | 31 | 34 | 35 | 37 |
| Nadelstichzahl [5] | 17 | 20 | 17 | 25 | 21 | 22 | 12 | 14 |

1) Laponite® RD - Verdicker - Lösung: Wässrige Lösung von 3% Natrium-Lithium-Magnesium-Schichtsilikat Laponite® RD (Fa. Altana-Byk) und 3% Pluriol® P900 (Fa. BASF SE)

2) Läufergrenze in $\mu$m: Schichtdicke, ab welche Läufer auftreten

3) Kochergrenze in $\mu$m, ab welcher Schichtdicke Kocher auftreten

4) Nadelstichgrenze in $\mu$m: Schichtdicke der Basislackschicht, ab der Nadelstiche Auftreten nach Applikation eines Basislackkeils und einer konstanten Schicht eines Zweikomponentenklarlacks und gemeinsamer Härtung im Umluftofen bei 140°C, 20 min 5) Nadelstichzahl: Anzahl der Nadelstiche ab Nadelstichgrenze des beschichteten Blechs mit Kantenlänge 30 cm x 50 cm

Die Ergebnisse der Tabelle 3 belegen, dass der Einsatz der erfindungsgemäß einzusetzenden Dispersion (PD) D1 in den Wasserbasislacken BL-E1 bis BL-E6 sowie BL-V2 deutliche Vorteile hinsichtlich aller bewerteten applikationstechnischen Eigenschaften aufweist. Des Weiteren ist im Vergleich zu BL-V2 deutlich erkennbar, dass die erfindungsgemäßen Spezifizierungen hinsichtlich der verwendeten Lösemittel (L1) in den erfindungsgemäßen Wasserbasislacken BL-E1 bis BL-E6 zu keinen negativen Einflüssen auf die applikationstechnischen Eigenschaften führen. Vielmehr führt eine weitere Reduzierung des Anteils der Lösemittel (L1) mit einem HLB-Wert zwischen 5 und 15 und einer Wasserlöslichkeit von > 1,5 Gew.-% bei 20°C, bezogen auf die Gesamtmenge an im Basislack vorhandenen Lösemitteln (L), auf unter 7 Gew.-% (BL-E5) und unter 5 Gew.-% (BL-E6) zu einem noch weiter verbesserten Nadelstichverhalten, was durch die erhöhte Nadelstichgrenze zum Ausdruck gebracht wird.

**Vergleich zwischen den erfindungsgemäßen Wasserbasislacken BL-E1 bis BL-E6 mit den Vergleichs-Wasserbasislacken BL-V1 bis BL-V6 in Hinblick auf Festkörper und Viskosität**

Neben verbesserten oder mindestens dem Erhalt von guten applikationstechnischen Eigenschaften, sollten die erfindungsgemäß hergestellten Wasserbasislacke ebenfalls gute Lagerstabilitäten aufweisen. Die Lagerstabilität der erfindungsgemäß hergestellten Wasserbasislacke BL-E1 bis BL-E6 wurde anhand der Hochscher-Viskosität über einen Zeitraum von 20 Tagen untersucht und dem Standard-Wasserbasislack BL-V1, der einen Schichtsilikat-Verdicker und die unvernetzte Mikrogel-Dispersion VD1 enthielt, gegenübergestellt.

Als zweiter Vergleich wurden die Wasserbasislacke BL-V2 bis BL-V6, enthaltend die Polyurethan-Harnstoff-Dispersion D1 herangezogen, die ebenso frei von Schichtsilikat-Verdickern waren, aber wie Vergleichs-Wasserbasislack BL-V1 im Gegensatz zu den erfindungsgemäßen Wasserbasislacken BL-E1 bis BL-E6, bezogen auf die Gesamtmenge an im Basislack vorhandenen Lösemitteln (L), in Summe mehr als 9 Gew.-% an Lösemitteln ausgewählt aus der Gruppe an Lösemitteln (L1) mit einem HLB-Wert zwischen 5 und 15 und einer Wasserlöslichkeit von > 1,5 Gew.-% bei 20°C, enthielten.

Die Hochscher-Viskosität wurde bei einer Scherrate von 1000 1/s, gemessen mit einem Rotations-Viskosimeter (Gerät Rheomat RM 180 der Firma Mettler-Toledo) bei 23°C, innerhalb einer Stunde nach der Herstellung des jeweiligen Wasserbasislacks sowie nach 2, 4, 8, und 20 Tagen gemessen. Die Proben wurden, abgesehen von den jeweiligen Messungen, über den gesamten Zeitraum bei 23°C ohne Einfluss äußerer Scherkräfte gelagert und kurz vor der Messung während einer Minute aufgeschüttelt.

Die Ergebnisse sind in Tabelle 4a und 4b dargestellt.

**Tabelle 4a:**

| Charakterisierung der Vergleichs-Wasserbasislacke BL-V1 bis BL-V6 in Hinblick auf Festkörper und Viskosität | | | | | | |
|---|---|---|---|---|---|---|
| **Bezeichnung des Wasserbasislacks** | **BL-V1** | **BL-V2** | **BL-V3** | **BL-V4** | **BL-V5** | **BL-V6** |
| Polyurethan-dispersion | VD1 | D1 | D1 | D1 | D1 | D1 |
| Enthält Laponite® RD - Verdicker - Lösung[1] | Ja | Nein | Nein | Nein | Nein | Nein |
| Gehalt in Gew.-%, bezogen auf die Gesamtmenge an im Basislack vorhandenen Lösemitteln (L), an Lösemittel (L1) mit HLB-Wert zwischen 5 und 15 und einer Wasserlöslichkeit > 1,5 Gew.-% bei 20°C | >9 | 17,6 | 24,0 | 24,0 | 24,0 | 24,0 |
| Festkörper | 17,6 | 29,1 | 28,3 | 29,3 | 27,5 | 29,7 |
| Hochscherviskosität in mPas bei 1000s$^{-1}$ nach | | | | | | |
| 0 Tagen | 58 | 62 | 62 | 65 | 61 | 64 |
| 2 Tagen | 59 | 68 | 72 | 84 | 85 | 87 |
| 4 Tagen | 62 | 74 | 78 | 106 | 81 | 93 |
| 8 Tagen | 60 | 77 | 81 | 94 | 84 | 94 |
| 20 Tagen | 59 | 78 | 81 | 114 | 99 | 166 |
| 1) Laponite® RD - Verdicker - Lösung: Wässrige Lösung von 3% Natrium-Lithium-Magnesium-Schichtsilikat Laponite® RD (Fa. Altana-Byk) und 3% Pluriol® P900 (Fa. BASF SE) | | | | | | |

**Tabelle 4b:**

| Charakterisierung der erfindungsgemäßen Wasserbasislacke BL-E1 bis BL-E6 in Hinblick auf Festkörper und Viskosität | | | | | | |
|---|---|---|---|---|---|---|
| Bezeichnung des Wasserbasislacks | BL-E1 | BL-E2 | BL-E3 | BL-E4 | BL-E5 | BL-E6 |
| Polyurethan-dispersion | D1 | D1 | D1 | D1 | D1 | D1 |
| Enthält Laponite® RD - Verdicker - Lösung[1] | Nein | Nein | Nein | Nein | Nein | Nein |
| Gehalt in Gew.-%, bezogen auf die Gesamtmenge an im Basislack vorhandenen Lösemitteln (L), an Lösemittel (L1) mit HLB-Wert zwischen 5 und 15 und einer Wasserlöslichkeit > 1,5 Gew.-% bei 20°C | 8,5 | 8,5 | 8,5 | 8,5 | 6,9 | 4,4 |
| Festkörper | 30,1 | 30,7 | 31,1 | 32,5 | 33,7 | 34,1 |
| Hochscherviskosität in mPa·s bei 1000s[1] nach | | | | | | |
| 0 Tagen | 63 | 67 | 67 | 66 | 64 | 67 |
| 2 Tagen | 70 | 64 | 69 | 71 | 66 | 69 |
| 4 Tagen | 73 | 65 | 70 | 72 | 67 | 69 |
| 8 Tagen | 73 | 63 | 68 | 65 | 66 | 68 |
| 20 Tagen | 69 | 58 | 65 | 64 | 66 | 68 |

Die Ergebnisse in Tabelle 4a und 4b zeigen, dass die erfindungsgemäßen Basislacke eine ausgezeichnete Lagerstabilität bei einem Festkörper im Bereich von 30 bis 35 Gew.-% aufweisen. Die Hochscher-Viskosität der erfindungsgemäßen Basislacke BL-E1 bis BL-E6 bleibt nahezu unverändert über einen Zeitraum von 20 Tagen und genügt demnach den Anforderungen, während die nicht erfindungsgemäßen Vergleichs-Basislacke BL-V2 bis BL-V6 diesen Rheologie-Stabilitätsanforderungen nicht genügen. Sie weisen einen deutlichen Anstieg der Hochscher-Viskosität auf.

Die ökologisch vorteilhafte, weitere Reduktion des Anteils des Lösemittelgehalts (L1) mit einem HLB-Wert zwischen 5 und 15 und einer Wasserlöslichkeit von > 1,5 Gew.-% bei 20°C an der Summe der Lösemittel (L) in einem wässrigen Basislack zu unter 7 Gew. % (BL-E5) und unter 5 Gew.-% (BL-E6) führt also ebenfalls zu ausgezeichneten Lagerstabilitäten.

Die Kombination aus einer Polyurethan-Dispersion VD1 mit Polyurethan-Partikeln, die nicht vernetzt sind, mit Schichtsilikat-Verdickern im Vergleichs-Wasserbasislack BL-V1 weist in diesen Prüfungen ebenfalls stabile Hochscher-Viskositäten auf, allerdings sind die oben gezeigten applikationstechnischen Eigenschaften deutlich nachteilig gegenüber den erfindungsgemäßen Varianten.

**Herstellung von erfindungsgemäßen, effektpigmentfreien Wasserbasislacken enthaltend das Polyurethanharnstoff-Mikrogel D1 und, bezogen auf die Gesamtmenge an im Basislack vorhandenen Lösemitteln (L), in Summe weniger als 9 Gew.-% an Lösemitteln ausgewählt aus der Gruppe bestehend aus Lösemitteln (L1) mit einem HLB-Wert zwischen 5 und 15 und einer Wasserlöslichkeit von >1,5 Gew.-% bei 20°C, mit einem hohen Festkörper im Bereich von 45 bis 55 Gew.-% (BL-E7 bis BL-E9), welche direkt als farbgebende Schicht auf einen gehärteten Füller, direkt auf einen Kunststoffuntergrund oder direkt auf ein mit einer Elektrotauchlackierung beschichtetes Metallsubstrat aufgetragen werden können**

Die erfindungsgemäßen, effektpigmentfreien Wasserbasislacke BL-E7 bis BL-E9 wurden analog der Vorschrift zur Herstellung der Vergleichswasserbasislacke BL-V2 bis BL-V6 und BL-E1 bis BL-E6 unter Einsatz der in Tabelle 5 aufgeführten Komponenten hergestellt. Mit Hilfe von deionisiertem Wasser und N,N-Dimethylethanolamin (Fa. BASF SE) wurde auf einen pH Wert von 8 und eine Hochscher-Viskosität von 125 mPas bei einer Scherbelastung von 1000 $s^{-1}$, gemessen mit einem Rotations-Viskosimeter (Gerät Rheomat RM 180 der Firma Mettler-Toledo) bei 23°C, eingestellt.

**Tabelle 5:**

| Herstellung von erfindungsgemäßen Wasserbasislacken BL-E7 bis BL-E9. | | | |
|---|---|---|---|
| Bezeichnung des Wasserbasislacks | BL-E7 | BL-E8 | BL-E9 |
| Komponente: | Gewichtsteile | | |
| WÄSSRIGE PHASE | | | |
| Deionisiertes Wasser | 10 | 10,8 | 11 |

(fortgesetzt)

**Herstellung von erfindungsgemäßen Wasserbasislacken BL-E7 bis BL-E9.**

| Bezeichnung des Wasserbasislacks | BL-E7 | BL-E8 | BL-E9 |
|---|---|---|---|
| Hydroxyfunktioneller Polyester; hergestellt gemäß Beispiel D, Spalte 16, Z. 37-59 der DE 4009858 A1 | 4,2 | | |
| Hydroxyfunktioneller Polyester; hergestellt gemäß Beispiel Bl1, Seite 8, Paragraph 146 der US 2014/0065428 A1 | | 2,52 | 2,52 |
| Luwipal@ 052 (Fa. BASF SE), Melamin-Formaldehyd-Harz | 5,8 | 5,8 | |
| Cymel® 385 (Fa. Cytec), Melamin-Formaldehyd-Harz | | | 5,68 |
| 2-Ethylhexanol, HLB 4,8 | 2,7 | 3,5 | 3,5 |
| Triethylenglykol, HLB 20,0 | 2,7 | 2,7 | 2,7 |
| 10%ige Lösung von N,N-Dimethylethanolamin (Fa. BASF SE) in Wasser | 0,5 | 0,5 | 0,5 |
| Hydroxyfunktionelles polyurethanmodifiziertes Polyacrylat; hergestellt gemäß S. 7, Z. 55 bis S.8, Z. 23 der DE 4437535 A1 | 6,3 | 6,3 | 6,3 |
| 50 Gew.-%ige Lösung Rheovis® PU 1250 (Fa. BASF SE) in Wasser Rheologiemittel | 0,6 | 0,6 | 0,6 |
| PU-Mikrogel-Dispersion gemäß Herstellbeispiel D1 | 16,4 | 16,4 | 16,4 |
| Rußpaste | 0,1 | 0,1 | 0,1 |
| Weißpaste | 50,7 | 50,7 | 50,7 |

Die Herstellung der Rußpaste wurde bereits unter Tabelle 2b beschrieben.

**Herstellung der Weißpaste:**

Die Weißpaste wurde aus 43 Gewichtsteilen einer gemäß der internationalen Patentanmeldung WO 91/15528 Bindemitteldispersion A hergestellten acrylierten Polyurethandispersion, 50 Gewichtsteilen Titan Rutil 2310, 3 Gewichtsteilen 1-Propoxy-2-Propanol und 4 Gewichtsteilen deionisiertem Wasser hergestellt.

**Vergleichsversuche zwischen den erfindungsgemäßen Wasserbasislacken BL-E7 bis BL-E9 in Hinblick auf die Läufer-, Kocher- und Nadelstichgrenze sowie Nadelstichzahl und Viskosität.**

Zur Bestimmung der applikationstechnischen Eigenschaften (Läufer-, Kocher-, und Nadelstichgrenze sowie Nadelstichzahl) wurden Mehrschichtlackierungen unter Einsatz der Wasserbasislacke (BL-E7 bis BL-E9) analog der vorherigen Vorschrift (siehe Vorschrift oberhalb Tabelle 3) hergestellt.

Die Lagerstabilität der Schichtsilikat-freien, erfindungsgemäß hergestellten Wasserbasislacke BL-E7 bis BL-E9 wurde analog der vorherigen Vorschrift (Vorschrift oberhalb Tabelle 4a) anhand der Hochscher-Viskosität über einen Zeitraum von 20 Tagen untersucht.

Die Ergebnisse sind in Tabelle 6 dargestellt.

**Tabelle 6:**

| Ergebnisse der Bestimmung der Läufer-, Kocher- und Nadelstichgrenze sowie Nadelstichzahl der Mehrschichtlackierungen und der Viskosität auf Basis der Wasserbasislacke BL-E7 bis BL-E9. | | | |
|---|---|---|---|
| Bezeichnung des Wasserbasislacks | BL-E7 | BL-E8 | BL-E9 |
| Polyurethandispersion | D1 | D1 | D1 |
| Gehalt in Gew.-%, bezogen auf die Gesamtmenge an im Basislack vorhandenen Lösemitteln (L), an Lösemittel (L1) mit HLB-Wert zwischen 5 und 15 und einer Wasserlöslichkeit > 1,5 Gew.-% bei 20°C | 8,9 | 7,2 | 4,5 |
| Festkörper | 47,6 | 51,5 | 52,4 |
| Läufergrenze in um [1] | > 70 | > 70 | > 70 |

(fortgesetzt)

| Ergebnisse der Bestimmung der Läufer-, Kocher- und Nadelstichgrenze sowie Nadelstichzahl der Mehrschichtlackierungen und der Viskosität auf Basis der Wasserbasislacke BL-E7 bis BL-E9. | | | |
|---|---|---|---|
| **Bezeichnung des Wasserbasislacks** | **BL-E7** | **BL-E8** | **BL-E9** |
| Polyurethandispersion | D1 | D1 | D1 |
| Kochergrenze in $\mu$m [2] | 47 | 49 | 46 |
| Nadelstichgrenze in $\mu$m [3] | 44 | 48 | 42 |
| Nadelstichzahl [4] | 6 | 13 | 8 |
| Hochscherviskosität in mPas bei $1000S^{-1}$ nach | | | |
| 0 Tagen | 126 | 123 | 128 |
| 2 Tagen | 129 | 125 | 131 |
| 4 Tagen | 131 | 124 | 133 |
| 8 Tagen | 133 | 126 | 129 |
| 20 Tagen | 134 | 122 | 128 |

1) Läufergrenze in $\mu$m: Schichtdicke, ab welche Läufer auftreten 2) Kochergrenze in um, ab welcher Schichtdicke Kocher auftreten

3) Nadelstichgrenze in $\mu$m: Schichtdicke der Basislackschicht, ab der Nadelstiche Auftreten nach Applikation eines Basislackkeils und einer konstanten Schicht eines Zweikomponentenklarlacks und gemeinsamer Härtung im Umluftofen bei 140°C, 20 min 4) Nadelstichzahl: Anzahl der Nadelstiche ab Nadelstichgrenze des beschichteten Blechs mit Kantenlänge 30 cm x 50 cm

Die Ergebnisse der Tabelle 6 belegen, dass der Einsatz der erfindungsgemäß einzusetzenden Dispersion D1 in den Wasserbasislacken BL-E7 bis BL-E9, also den erfinderischen Wasserbasislacken mit hohem Festkörper im Bereich von 47 bis 53 Gew.-%, zu ausgezeichneten applikationstechnischen Eigenschaften führt. Die Läufer-, Kocher- und Nadelstichgrenze wurde im Vergleich zu den bereits guten Ergebnissen der erfinderischen Wasserbasislacke BL-E1 bis BL-E6 (Tabelle 3) nochmal deutlich angehoben und die Nadelstichzahl nochmalig reduziert.

Des Weiteren belegen die Ergebnisse der Tabelle 6, dass auch die erfindungsgemäßen Basislacke mit hohem Festkörperanteil (BL-E7 bis BL-E9) eine ausgezeichnete Lagerstabilität erzielen, was durch eine geringe Veränderung der Hochscher-Viskosität über einen Zeitraum von 20 Tagen zum Ausdruck gebracht wird.

Die weitere Reduktion des Anteils des Lösemittelgehalts (L1) mit einem HLB-Wert zwischen 5 und 15 und einer Wasserlöslichkeit von > 1,5 Gew.-% bei 20°C an der Summe der Lösemittel (L) zu unter 7,5 Gew. % (BL-E8) und unter 5 Gew.-% (BL-E9) führt zu keiner nennenswerten Veränderung der untersuchten applikationstechnischen Eigenschaften und Lagerstabilitäten im Vergleich zu dem erfinderischen Wasserbasislack BL-E7.

Gezeigt wurde schlussendlich, dass eine deutliche Verbesserung der applikationstechnischen Eigenschaften und der Lagerstabilität von wässrigen Basislacken enthaltend Farbpigmente auch bei einem ökologisch vorteilhafteren hohen Festkörper erreicht werden kann.

Zusammenfassend zeigen die Beispiele, dass die erfindungsgemäßen Wasserbasislacke BL-E1 bis BL-E9 gegenüber den Vergleichs-Wasserbasislacken BL-V1 bis BL-V6 sehr gute applikationstechnische Eigenschaften mit einer ausgezeichneten Lagerstabilität kombinieren. Der Standard-Wasserbasislack BL-V1, welcher eine Polyurethandispersion VD1 mit unvernetzten Partikeln umfasst, weist zwar eine gute Lagerviskositätsstabilität auf, erzielt aber deutlich schlechtere applikationstechnische Eigenschaften. Die Vergleichs-Wasserbasislacke BL-V2 bis BL-V6, welche die erfindungsgemäß einzusetzende Mikrogel-Dispersion D1 umfassen, erzielen gute applikationstechnische Eigenschaften, aber nicht zufriedenstellende Lagerstabilitäten.

Nur die erfinderischen Wasserbasislacke haben also die dieser Anmeldung zugrunde liegende Aufgabe einer ausgezeichneten Lagerstabilität unter Beibehaltung guter applikationstechnischer Eigenschaften gelöst.

**Patentansprüche**

1. Pigmentierter wässriger Basislack enthaltend eine wässrige Polyurethan-Polyharnstoff-Dispersion (PD) mit in der Dispersion enthaltenen Polyurethan-Polyharnstoff-Partikeln mit einer mittleren Teilchengröße (Volumenmittel) von 40 bis 2000 nm, gemessen wie in der Beschreibung beschrieben, und einem Gelanteil von mindestens 50 Gew.-%, gemessen wie in der Beschreibung beschrieben, wobei die Polyurethan-Polyharnstoff-Partikel, jeweils in umgesetzter Form,

(Z. 1.1) mindestens ein Isocyanatgruppen-haltiges Polyurethan-Präpolymer enthaltend anionische und/oder in anionische Gruppen überführbare Gruppen sowie

(Z.1.2) mindestens ein Polyamin enthaltend zwei primäre Aminogruppen und ein oder zwei sekundäre Aminogruppen enthalten,

**dadurch gekennzeichnet,**

**dass** der wässrige Basislack, bezogen auf die Gesamtmenge an im Basislack vorhandenen Lösemitteln (L), in Summe weniger als 9 Gew.-% an Lösemitteln ausgewählt aus der Gruppe bestehend aus Lösemitteln (L1) mit einem HLB-Wert zwischen 5 und 15 und einer Wasserlöslichkeit von > 1,5 Gew.-% bei 20°C, gemessen wie in der Beschreibung beschrieben, enthält, wobei

der HLB-Wert eines Lösemittels (L) dabei wie folgt definiert ist:

$$\text{HLB-Wert (L)} = 20 * (1 - M \text{ (lipophiler Anteil (L))} / M \text{ (L))},$$

wobei den lipophilen Anteil eines Lösemittels (L) die folgenden Kohlenstoff-haltigen Gruppen ausmachen:
Jede Gruppe $CH_n$ mit n = 1 bis 3, sofern sich die Gruppe

(i) nicht in alpha Stellung zu OH, $NH_2$, $CO_2H$ befindet,

(ii) nicht in Ethylenoxid-Einheiten, die sich in einer Ethylenoxid-Kette mit einer endständigen OH-Gruppe vorfinden, befindet und/oder

(iii) nicht in einem cyclischen Molekül oder Molekülteil in alpha-Stellung zu einer verbrückenden funktionellen Gruppe ausgewählt aus -O-, NH- befindet.

2. Pigmentierter wässriger Basislack nach Anspruch 1, **dadurch gekennzeichnet, dass** das Präpolymer (Z.1.1) der Polyurethan-Polyharnstoff-Dispersion, Carbonsäuregruppen enthält.

3. Pigmentierter wässriger Basislack nach Anspruch 1 bis 2, **dadurch gekennzeichnet, dass** die Dispersion (PD) zu mindestens 90 Gew.-% aus den Polyurethan-Polyharnstoff-Partikeln sowie Wasser besteht.

4. Pigmentierter wässriger Basislack nach Anspruch 1 bis 3, **dadurch gekennzeichnet, dass** er zudem mindestens ein von dem in der Dispersion (PD) enthaltenen Polymer unterschiedliches hydroxyfunktionelles Polymer sowie ein Melamin-Formaldehyd-Harz enthält.

5. Pigmentierter wässriger Basislack nach Anspruch 1 bis 4, **dadurch gekennzeichnet, dass** er, bezogen auf die Gesamtmenge an im Basislack vorhandenen Lösemitteln (L), in Summe weniger als 9 Gew.-% an Lösemitteln ausgewählt aus der Gruppe bestehend aus Lösemitteln (L1) mit einem HLB-Wert größer 7,8 und einer Wasserlöslichkeit größer 7,7 bei 20°C enthält.

6. Pigmentierter wässriger Basislack nach Anspruch 1 bis 5, **dadurch gekennzeichnet, dass** er einen Festkörper von 15 bis 60 Gew.-%, bevorzugt 30 bis 55 Gew.-% aufweist.

7. Pigmentierter wässriger Basislack nach Anspruch 1 bis 6, **dadurch gekennzeichnet, dass** er bei 23°C und einer Scherbelastung von 1000 1/s eine Viskosität, gemessen wie in der Beschreibung beschrieben, von 40 bis 180 mPa·s, bevorzugt 50 bis 150 mPa·s und nochmals besonders bevorzugt von 60 bis 135 mPa·s aufweist.

8. Pigmentierter wässriger Basislack nach Anspruch 1 bis 7, **dadurch gekennzeichnet, dass** die prozentuale Summe aus dem Festkörper des Basislacks und dem Anteil von Wasser am Basislack bei mindestens 70 Gew.-% liegt.

9. Pigmentierter wässriger Basislack nach Anspruch 1 bis 8, **dadurch gekennzeichnet, dass** die prozentuale Summe aus dem Festkörper des Basislacks und dem Anteil von Wasser am Basislack bei mindestens 80 Gew.-% liegt.

10. Verwendung eines pigmentierten wässrigen Basislacks gemäß einem der Ansprüche 1 bis 9 zur Verbesserung der Lagerstabilität sowie den applikationstechnischen Eigenschaften, insbesondere der Stabilität gegen Nadelstiche und Kocher, von Basislackschichten in Mehrschichtlackierungen.

11. Verfahren zur Herstellung einer mehrschichtigen Lackierung, bei dem

(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,

**dadurch gekennzeichnet, dass** in Stufe (1) ein pigmentierter wässriger Basislack gemäß einem der Ansprüche 1 bis 9 eingesetzt wird.

12. Verfahren nach Anspruch 11, **dadurch gekennzeichnet, dass** das Substrat ein mit einer gehärteten Elektrotauchlackschicht beschichtetes metallisches Substrat ist und alle auf die Elektrotauchlackschicht applizierten Schichten gemeinsam gehärtet werden.

13. Mehrschichtlackierung, herstellbar nach dem Verfahren gemäß Anspruch 11 oder 12.

**Claims**

1. Pigmented aqueous basecoat material comprising an aqueous polyurethane-polyurea dispersion (PD) having polyurethane-polyurea particles present in the dispersion, having an average particle size (volume average) of 40 to 2000 nm, measured as described in the description, and having a gel fraction of at least 50 wt%, measured as described in the description, the polyurethane-polyurea particles, in each case in reacted form, comprising
(Z.1.1) at least one polyurethane prepolymer containing isocyanate groups and comprising anionic groups and/or groups which can be converted into anionic groups, and also
(Z.1.2) at least one polyamine comprising two primary amino groups and one or two secondary amino groups,
**characterized in that**
the aqueous basecoat material, based on the total amount of solvents (L) present in the basecoat material, contains in total less than 9 wt% of solvents selected from the group consisting of solvents (L1) having an HLB of between 5 and 15 and a water solubility of > 1.5 wt% at 20°C, measured as described in the description, the HLB of a solvent (L) being defined as follows:

$$\text{HLB (L)} = 20 * (1-M \text{ (lipophilic fraction of (L))}/M(L)),$$

the lipophilic fraction of a solvent (L) being made up of the following carbon-containing groups:
every group $CH_n$ with n = 1 to 3, provided that the group

(i) is not in alpha position to OH, $NH_2$, $CO_2H$,
(ii) is not in ethylene oxide units which are in an ethylene oxide chain having a terminal OH group, and/or
(iii) is not in a cyclic molecule or molecular moiety in alpha position to a bridging functional group selected from -O-, NH-.

2. Pigmented aqueous basecoat material according to Claim 1, **characterized in that** the prepolymer (Z.1.1) of the polyurethane-polyurea dispersion comprises carboxylic acid groups.

3. Pigmented aqueous basecoat material according to Claim 1 to 2, **characterized in that** the dispersion (PD) consists, up to at least 90 wt%, of the polyurethane-polyurea particles and also water.

4. Pigmented aqueous basecoat material according to Claim 1 to 3, **characterized in that** it further comprises a melamine-formaldehyde resin and also at least one hydroxy-functional polymer which is different from the polymer present in the dispersion (PD).

5. Pigmented aqueous basecoat material according to Claim 1 to 4, **characterized in that**, based on the total amount of solvents (L) present in the basecoat material, the basecoat material contains in total less than 9 wt% of solvents selected from the group consisting of solvents (L1) having an HLB of more than 7.8 and a water solubility of more than 7.7 at 20°C.

6. Pigmented aqueous basecoat material according to Claim 1 to 5, **characterized in that** it has a solids content of 15 to 60 wt%, preferably 30 to 55 wt%.

7. Pigmented aqueous basecoat material according to Claim 1 to 6, **characterized in that** it has a viscosity, measured as described in the description, of 40 to 180 mPa·s, preferably 50 to 150 mPa·s, and more preferably of 60 to 135 mPa·s at 23°C under a shearing load of 1000 1/s.

8. Pigmented aqueous basecoat material according to Claim 1 to 7, **characterized in that** the percentage total of the solids content of the basecoat material and the fraction of water in the basecoat material is at least 70 wt%.

9. Pigmented aqueous basecoat material according to Claim 1 to 8, **characterized in that** the percentage total of the solids content of the basecoat material and the fraction of water in the basecoat material is at least 80 wt%.

10. Use of a pigmented aqueous basecoat material according to any of Claims 1 to 9 to improve the storage stability and also the applications properties, more particularly the stability with respect to pinholes and pops, of basecoat films in multicoat paint systems.

11. Method for producing a multicoat paint system, in which

(1) a pigmented aqueous basecoat material is applied to a substrate,
(2) a polymer film is formed from the coating material applied in stage (1),
(3) a clearcoat material is applied to the resulting basecoat film, and then
(4) the basecoat film is cured together with the clearcoat film,

**characterized in that** a pigmented aqueous basecoat material according to any of Claims 1 to 9 is used in stage (1).

12. Method according to Claim 11, **characterized in that** the substrate is a metallic substrate coated with a cured electrocoat film, and all of the films applied to the electrocoat film are cured jointly.

13. Multicoat paint system producible by the method according to Claim 11 or 12.


**Revendications**

1. Peinture de base pigmentée à l'eau contenant une dispersion aqueuse de polyuréthane-polyurée (PD), les particules de polyuréthane-polyurée contenues dans la dispersion présentant une granulométrie moyenne (moyenne en volume) de 40 à 2 000 nm, mesurée comme décrit dans la description, et contenant une proportion de gel d'au moins 50 % en poids, mesurée comme décrit dans la description, les particules de polyuréthane-polyurée contenant chacune, sous forme ayant réagi,
(Z.1.1) au moins un prépolymère de polyuréthane contenant des groupes isocyanate, contenant des groupes anioniques et/ou pouvant être convertis en des groupes anioniques, ainsi que
(Z.1.2) au moins une polyamine contenant deux groupes amino primaires et un ou deux groupes amino secondaires,
**caractérisée en ce que**,
la peinture de base à l'eau contient, par rapport à la quantité totale des solvants (L) présents dans la peinture de base, au total moins de 9 % en poids de solvants choisis dans le groupe consistant en les solvants (L1) ayant une valeur HLB entre 5 et 15 et une solubilité dans l'eau >1,5 % en poids à 20 °C, mesurée comme décrit dans la description,
la valeur HLB d'un solvant (L) étant alors définie comme suit :

$$\text{Valeur HLB (L)} = 20*(1 - M \text{ (partie lipophile (L))}/M \text{ (L)}),$$

la partie lipophile d'un solvant (L) étant constituée des groupes carbonés suivants :
chaque groupe $CH_n$ avec n = 1 à 3, du moment que le groupe

(i) ne se trouve pas en position alpha par rapport à OH, $NH_2$, $CO_2H$,
(ii) ne se trouve pas dans des motifs oxyde d'éthylène qui se trouvent dans une chaîne oxyde d'éthylène avec un groupe OH terminal et/ou
(iii) ne se trouve pas dans une molécule ou une partie de molécule cyclique en position alpha par rapport à un groupe fonctionnel pontant choisi parmi -O-, NH-.

**2.** Peinture de base pigmentée à l'eau selon la revendication 1, **caractérisée en ce que** le prépolymère (Z.1.1) de la dispersion de polyuréthane-polyurée contient des groupes acide carboxylique.

**3.** Peinture de base pigmentée à l'eau selon les revendications 1 à 2, **caractérisée en ce que** la dispersion (PD) est à raison d'au moins 90 % en poids constituée de particules de polyuréthane-polyurée, ainsi que d'eau.

**4.** Peinture de base pigmentée à l'eau selon les revendications 1 à 3, **caractérisée en ce qu'**elle contient en outre au moins un polymère hydroxy-fonctionnel différent du polymère contenu dans la dispersion (PD), ainsi qu'une résine de mélamine-formaldéhyde.

**5.** Peinture de base pigmentée à l'eau selon les revendications 1 à 4, **caractérisée en ce qu'**elle contient, par rapport à la quantité totale des solvants (L) présents dans la peinture de base, un total inférieur à 9 % en poids de solvants choisis dans le groupe consistant en les solvants (L1) ayant une valeur HLB supérieure à 7,8 et une solubilité dans l'eau supérieure à 7,7 à 20 °C.

**6.** Peinture de base pigmentée à l'eau selon les revendications 1 à 5, **caractérisée en ce qu'**elle présente une teneur en extrait sec de 15 à 60 % en poids, de préférence de 30 à 55 % en poids.

**7.** Peinture de base pigmentée à l'eau selon les revendications 1 à 6, **caractérisée en ce qu'**elle présente à 23 °C et pour une contrainte de cisaillement de 1 000 1/s une viscosité, mesurée comme décrit dans la description, de 40 à 180 mPa·s, de préférence de 50 à 150 mPa·s et encore d'une manière particulièrement préférée de 60 à 135 mPa·s.

**8.** Peinture de base pigmentée à l'eau selon les revendications 1 à 7, **caractérisée en ce que** la somme en pourcentage, de la teneur en extrait sec de la peinture de base et de la proportion d'eau dans la peinture de base, est d'au moins 70 % en poids.

**9.** Peinture de base pigmentée à l'eau selon les revendications 1 à 8, **caractérisée en ce que** la somme des pourcentages de la teneur en extrait sec de la peinture de base et de la proportion de l'eau dans la peinture de base est d'au moins 80 % en poids.

**10.** Utilisation d'une peinture de base pigmentée à l'eau selon l'une des revendications 1 à 9 pour améliorer la stabilité au stockage ainsi que les propriétés techniques en cours d'application, en particulier la stabilité vis-à-vis des trous d'épingle et de l'ébullition, des couches de peinture de base dans des systèmes multicouches.

**11.** Procédé de fabrication d'un revêtement multicouche, dans lequel

   (1) on applique sur un substrat une peinture de base pigmentée à l'eau,
   (2) à partir de la peinture appliquée dans l'étape (1), on forme un film polymère,
   (3) on applique sur la couche de peinture de base ainsi obtenue un vernis transparent, puis
   (4) on durcit la couche de peinture de base ensemble avec la couche de vernis transparent,

   **caractérisé en ce que**, dans l'étape (1), on utilise une peinture de base pigmentée à l'eau selon l'une des revendications 1 à 9.

**12.** Procédé selon la revendication 11, **caractérisé en ce que** le substrat est un substrat métallique revêtu d'une couche de peinture électrophorétique durcie, et que toutes les couches appliquées sur la couche de peinture électrophorétique sont durcies ensemble.

**13.** Système multicouche, pouvant être fabriqué par le procédé selon la revendication 11 ou 12.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19948004 A1
- DE 10043405 C1
- DE 19719924 A1
- DE 3137748 A1
- WO 2014007915 A1
- WO 2012160053 A1
- DE 3513248 A1
- US 4408008 A
- EP 1736246 A1
- DE 10238349 A1
- DE 4009858 A1
- US 20140065428 A1
- WO 9115528 A1
- DE 4437535 A1
- WO 9215405 A
- DE 4009858 A
- EP 1534792 B1
- WO 9115528 A

**In der Beschreibung aufgeführte Nicht-Patentliteratur**

- **G. NIMTZ ; P. MARQUARDT ; D. STAUFFER ; W. WEISS.** *Science,* 1988, vol. 242, 1671
- Makromolekulare Stoffe. **HOUBEN WEYL.** Methoden der organischen Chemie. Georg Thieme Verlag, 1961, vol. XIV/1, 411 ff
- Römpp-Lexikon Lacke und Druckfarben. Georg Thieme Verlag, 1998, 176451
- Römpp-Lexikon Lacke und Druckfarben. Georg Thieme Verlag, 1998, 358-359
- **R.-P. KRÜGER ; R. GNAUCK ; R. ALGEIER.** *Plaste und Kautschuk,* 1982, vol. 20, 274
- **E. SCHRÖDER ; G. MÜLLER ; K.-F. ARNDT.** Leitfaden der Polymercharakterisierung. Akademie-Verlag, 1982, 47-54